# EUROPEAN PATENT APPLICATION

(11) **EP 4 604 428 A1**
(43) Date of publication of application: **20.08.2025**
(21) Application number: 23877507.6
(22) Date of filing: 11.09.2023
(51) Int. Cl.: H04L 1/00, H04L 5/00, H04L 27/26, H04W 16/14, H04W 84/12

(54) **METHOD AND APPARATUS FOR TRANSMITTING AND RECEIVING PPDU BASED ON MCS CONFIGURATION IN WIRELESS LAN SYSTEM**

(30) Priority: 14.10.2022 KR 20220132516
(71) Applicant: LG Electronics Inc., Yeongdeungpo-gu Seoul 07336 (KR)
(72) Inventor: PARK, Eunsung, Seoul 06772 (KR); CHUN, Jinyoung, Seoul 06772 (KR); CHOI, Jinsoo, Seoul 06772 (KR); LIM, Dongguk, Seoul 06772 (KR)
(74) Representative: Frenkel, Matthias Alexander
(86) International application number: PCT/KR2023/013564
(87) International publication number: WO 2024/080577

(57) **Abstract**

Disclosed are a method and apparatus for operating in a wireless LAN system. The method performed by a first STA in a wireless LAN system, according to an embodiment of the present disclosure, comprises the steps of: receiving, from a second STA, first information indicating a first modulation and coding scheme (MCS) index or a second MCS index associated with a duplication (DUP) mode; and on the basis of the first information, transmitting a first physical layer protocol data unit (PPDU) to the second STA, wherein on the basis that the first information indicates the first MCS index in a 20*N (N is a natural number of 1 or more) MHz, 40*N MHz, or 80*N MHz bandwidth, a first number of data tones are used, and on the basis that the first information indicates the second MCS index in the 20*N MHz, 40*N MHz, or 80*N MHz bandwidth, a second number of data tones, which is less than the first number, may be used.

## Description

### [TECHNICAL FIELD]

The present disclosure relates to a communication operation in a Wireless Local Area Network (WLAN) system, and more specifically, to a method and device for transmitting and receiving a physical protocol data unit (PPDU) based on a modulation and coding scheme (MCS) setting in a next-generation wireless LAN system.

### [BACKGROUND ART]

New technologies for improving transmission rates, increasing bandwidth, improving reliability, reducing errors, and reducing latency have been introduced for a wireless LAN (WLAN). Among WLAN technologies, an Institute of Electrical and Electronics Engineers (IEEE) 802.11 series standard may be referred to as Wi-Fi. For example, technologies recently introduced to WLAN include enhancements for Very High-Throughput (VHT) of the 802.11ac standard, and enhancements for High Efficiency (HE) of the IEEE 802.11ax standard.

In order to provide a more advanced wireless communication environment, improved technologies for Extremely High Throughput (EHT) are being discussed. For example, technologies for MIMO and multiple access point (AP) coordination that support increased bandwidth, efficient utilization of multiple bands, and increased spatial streams are being studied, and in particular, various technologies are being studied to support low latency or real-time traffic. Furthermore, new technologies are being discussed to support ultra high reliability (UHR), including improvements or extensions of EHT technologies.

### [Disclosure]

### [Technical Problem]

The technical problem of the present disclosure is to provide a PPDU transmission and reception method and device based on MCS setting in a wireless LAN system.

The technical problem of the present disclosure is to provide a PPDU transmission and reception method and device based on MCS definition and setting in the mmWave band.

The technical objects to be achieved by the present disclosure are not limited to the above-described technical objects, and other technical objects which are not described herein will be clearly understood by those skilled in the pertinent art from the following description.

### [Technical Solution]

According to one embodiment of the present disclosure, a method performed by a first station (STA) in a wireless LAN system may include receiving first information indicating a first modulation and coding scheme (MCS) index or a second MCS index associated with a duplication (DUP) mode from a second STA; and transmitting a first physical layer protocol data unit (PPDU) to the second STA based on the first information, and based on the first information indicating the first MCS index in a bandwidth of 20*N MHz (N is a natural number greater than or equal to 1), 40*N MHz, or 80*N MHz, a first number of data tones may be used, and based on the first information indicating the second MCS index in a bandwidth of 20*N MHz, 40*N MHz, or 80*N MHz, a second number of data tones smaller than the first number may be used.

According to another embodiment of the present disclosure, a method performed by a second station (STA) in a wireless LAN system may include transmitting first information indicating a first modulation and coding scheme (MCS) index or a second MCS index associated with a duplication (DUP) mode to a first STA; and receiving a first physical layer protocol data unit (PPDU) from the first STA based on the first information, and based on the first information indicating the first MCS index in a bandwidth of 20*N MHz (N is a natural number greater than or equal to 1), 40*N MHz, or 80*N MHz, a first number of data tones may be used, and based on the first information indicating the second MCS index in a bandwidth of 20*N MHz, 40*N MHz, or 80*N MHz, a second number of data tones smaller than the first number may be used.

### [Technical Effects]

According to various embodiments of the present disclosure, a PPDU transmission and reception method and device based on MCS setting in a wireless LAN system can be provided.

A technical problem of the present disclosure is to provide a method and device for transmitting and receiving a PPDU based on defining and setting an MCS in a mmWave band.

Effects achievable by the present disclosure are not limited to the above-described effects, and other effects which are not described herein may be clearly understood by those skilled in the pertinent art from the following description.

### [Description of Diagrams]

Accompanying drawings included as part of detailed description for understanding the present disclosure provide embodiments of the present disclosure and describe technical features of the present disclosure with detailed description.
FIG. 1 illustrates a block configuration diagram of a wireless communication device according to an embodiment of the present disclosure.
FIG. 2 is a diagram illustrating an exemplary structure of a WLAN system to which the present disclosure may be applied.
FIG. 3 is a diagram for describing a link setup process to which the present disclosure may be applied.
FIG. 4 is a diagram for describing a backoff process to which the present disclosure may be applied.
FIG. 5 is a diagram for describing a frame transmission operation based on CSMA/CA to which the present disclosure may be applied.
FIG. 6 is a diagram for describing an example of a frame structure used in a WLAN system to which the present disclosure may be applied.
FIG. 7 is a diagram illustrating examples of PPDUs defined in the IEEE 802.11 standard to which the present disclosure can be applied.
FIG. 8, FIG. 9, and FIG. 10 are diagrams for explaining examples of resource units of a wireless LAN system to which the present disclosure can be applied.
FIG. 11 is a diagram illustrating regional examples of channelization of the mmWave band to which the present disclosure can be applied.
FIG. 12 is a flowchart for explaining a method for a first STA to transmit a PPDU according to an embodiment of the present disclosure.
FIG. 13 is a flowchart for explaining a method for a second STA to transmit a PPDU according to an embodiment of the present disclosure.

### [Best Mode]

Hereinafter, embodiments according to the present disclosure will be described in detail by referring to accompanying drawings. Detailed description to be disclosed with accompanying drawings is to describe exemplary embodiments of the present disclosure and is not to represent the only embodiment that the present disclosure may be implemented. The following detailed description includes specific details to provide complete understanding of the present disclosure. However, those skilled in the pertinent art knows that the present disclosure may be implemented without such specific details.

In some cases, known structures and devices may be omitted or may be shown in a form of a block diagram based on a core function of each structure and device in order to prevent a concept of the present disclosure from being ambiguous.

In the present disclosure, when an element is referred to as being "connected", "combined" or "linked" to another element, it may include an indirect connection relation that yet another element presents therebetween as well as a direct connection relation. In addition, in the present disclosure, a term, "include" or "have", specifies the presence of a mentioned feature, step, operation, component and/or element, but it does not exclude the presence or addition of one or more other features, stages, operations, components, elements and/or their groups.

In the present disclosure, a term such as "first", "second", etc. is used only to distinguish one element from other element and is not used to limit elements, and unless otherwise specified, it does not limit an order or importance, etc. between elements. Accordingly, within a scope of the present disclosure, a first element in an embodiment may be referred to as a second element in another embodiment and likewise, a second element in an embodiment may be referred to as a first element in another embodiment.

A term used in the present disclosure is to describe a specific embodiment, and is not to limit a claim. As used in a described and attached claim of an embodiment, a singular form is intended to include a plural form, unless the context clearly indicates otherwise. A term used in the present disclosure, "and/or", may refer to one of related enumerated items or it means that it refers to and includes any and all possible combinations of two or more of them. In addition, "/" between words in the present disclosure has the same meaning as "and/or", unless otherwise described.

Examples of the present disclosure may be applied to various wireless communication systems. For example, examples of the present disclosure may be applied to a wireless LAN system. For example, examples of the present disclosure may be applied to an IEEE 802.11a/g/n/ac/ax standards-based wireless LAN. Furthermore, examples of the present disclosure may be applied to a wireless LAN based on the newly proposed IEEE 802.11be (or EHT) standard. Examples of the present disclosure may be applied to an IEEE 802.11be Release-2 standard-based wireless LAN corresponding to an additional enhancement technology of the IEEE 802.11be Release-1 standard. Additionally, examples of the present disclosure may be applied to a next-generation standards-based wireless LAN after IEEE 802.11be. Further, examples of this disclosure may be applied to a cellular wireless communication system. For example, it may be applied to a cellular wireless communication system based on Long Term Evolution (LTE)-based technology and 5G New Radio (NR)-based technology of the 3rd Generation Partnership Project (3GPP) standard.

Hereinafter, technical features to which examples of the present disclosure may be applied will be described.

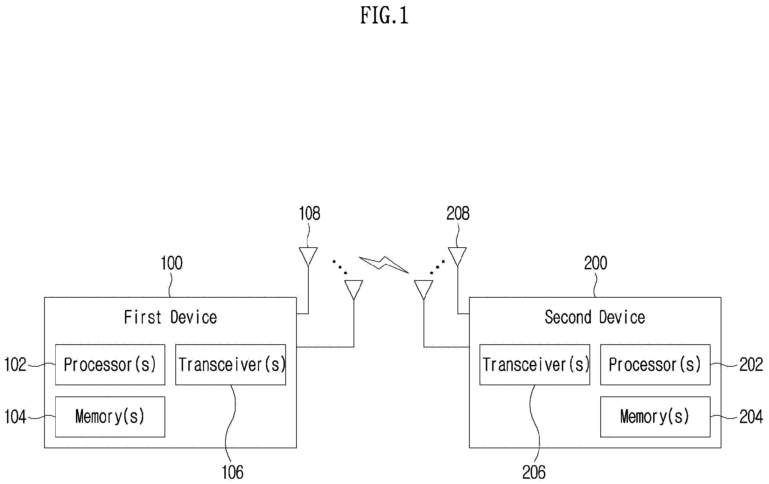

FIG. 1 illustrates a block diagram of a wireless communication device according to an embodiment of the present disclosure.

The first device 100 and the second device 200 illustrated in FIG. 1 may be replaced with various terms such as a terminal, a wireless device, a Wireless Transmit Receive Unit (WTRU), an User Equipment (UE), a Mobile Station (MS), an user terminal (UT), a Mobile Subscriber Station (MSS), a Mobile Subscriber Unit (MSU), a subscriber station (SS), an advanced mobile station (AMS), a wireless terminal (WT), or simply user, etc. In addition, the first device 100 and the second device 200 include an access point (AP), a base station (BS), a fixed station, a Node B, a base transceiver system (BTS), a network, It may be replaced with various terms such as an Artificial Intelligence (AI) system, a road side unit (RSU), a repeater, a router, a relay, and a gateway.

The devices 100 and 200 illustrated in FIG. 1 may be referred to as stations (STAs). For example, the devices 100 and 200 illustrated in FIG. 1 may be referred to by various terms such as a transmitting device, a receiving device, a transmitting STA, and a receiving STA. For example, the STAs 110 and 200 may perform an access point (AP) role or a non-AP role. That is, in the present disclosure, the STAs 110 and 200 may perform functions of an AP and/or a non-AP. When the STAs 110 and 200 perform an AP function, they may be simply referred to as APs, and when the STAs 110 and 200 perform non-AP functions, they may be simply referred to as STAs. In addition, in the present disclosure, an AP may also be indicated as an AP STA.

Referring to FIG. 1, the first device 100 and the second device 200 may transmit and receive radio signals through various wireless LAN technologies (e.g., IEEE 802.11 series). The first device 100 and the second device 200 may include an interface for a medium access control (MAC) layer and a physical layer (PHY) conforming to the IEEE 802.11 standard.

In addition, the first device 100 and the second device 200 may additionally support various communication standards (e.g., 3GPP LTE series, 5G NR series standards, etc.) technologies other than wireless LAN technology. In addition, the device of the present disclosure may be implemented in various devices such as a mobile phone, a vehicle, a personal computer, augmented reality (AR) equipment, and virtual reality (VR) equipment, etc. In addition, the STA of the present specification may support various communication services such as a voice call, a video call, data communication, autonomous-driving, machine-type communication (MTC), machine-to-machine (M2M), device-to-device (D2D), IoT (Internet-of-Things), etc.

A first device 100 may include one or more processors 102 and one or more memories 104 and may additionally include one or more transceivers 106 and/or one or more antennas 108. A processor 102 may control a memory 104 and/or a transceiver 106 and may be configured to implement description, functions, procedures, proposals, methods and/or operation flow charts disclosed in the present disclosure. For example, a processor 102 may transmit a wireless signal including first information/signal through a transceiver 106 after generating first information/signal by processing information in a memory 104. In addition, a processor 102 may receive a wireless signal including second information/signal through a transceiver 106 and then store information obtained by signal processing of second information/signal in a memory 104. A memory 104 may be connected to a processor 102 and may store a variety of information related to an operation of a processor 102. For example, a memory 104 may store a software code including instructions for performing all or part of processes controlled by a processor 102 or for performing description, functions, procedures, proposals, methods and/or operation flow charts disclosed in the present disclosure. Here, a processor 102 and a memory 104 may be part of a communication modem/circuit/chip designed to implement a wireless LAN technology (e.g., IEEE 802.11 series). A transceiver 106 may be connected to a processor 102 and may transmit and/or receive a wireless signal through one or more antennas 108. A transceiver 106 may include a transmitter and/or a receiver. A transceiver 106 may be used together with a RF (Radio Frequency) unit. In the present disclosure, a device may mean a communication modem/circuit/chip.

A second device 200 may include one or more processors 202 and one or more memories 204 and may additionally include one or more transceivers 206 and/or one or more antennas 208. A processor 202 may control a memory 204 and/or a transceiver 206 and may be configured to implement description, functions, procedures, proposals, methods and/or operation flows charts disclosed in the present disclosure. For example, a processor 202 may generate third information/signal by processing information in a memory 204, and then transmit a wireless signal including third information/signal through a transceiver 206. In addition, a processor 202 may receive a wireless signal including fourth information/signal through a transceiver 206, and then store information obtained by signal processing of fourth information/signal in a memory 204. A memory 204 may be connected to a processor 202 and may store a variety of information related to an operation of a processor 202. For example, a memory 204 may store a software code including instructions for performing all or part of processes controlled by a processor 202 or for performing description, functions, procedures, proposals, methods and/or operation flow charts disclosed in the present disclosure. Here, a processor 202 and a memory 204 may be part of a communication modem/circuit/chip designed to implement a wireless LAN technology (e.g., IEEE 802.11 series). A transceiver 206 may be connected to a processor 202 and may transmit and/or receive a wireless signal through one or more antennas 208. A transceiver 206 may include a transmitter and/or a receiver. A transceiver 206 may be used together with a RF unit. In the present disclosure, a device may mean a communication modem/circuit/chip.

Hereinafter, a hardware element of a device 100, 200 will be described in more detail. It is not limited thereto, but one or more protocol layers may be implemented by one or more processors 102, 202. For example, one or more processors 102, 202 may implement one or more layers (e.g., a functional layer such as PHY, MAC). One or more processors 102, 202 may generate one or more PDUs (Protocol Data Unit) and/or one or more SDUs (Service Data Unit) according to description, functions, procedures, proposals, methods and/or operation flow charts disclosed in the present disclosure. One or more processors 102, 202 may generate a message, control information, data or information according to description, functions, procedures, proposals, methods and/or operation flow charts disclosed in the present disclosure. One or more processors 102, 202 may generate a signal (e.g., a baseband signal) including a PDU, a SDU, a message, control information, data or information according to functions, procedures, proposals and/or methods disclosed in the present disclosure to provide it to one or more transceivers 106, 206. One or more processors 102, 202 may receive a signal (e.g., a baseband signal) from one or more transceivers 106, 206 and obtain a PDU, a SDU, a message, control information, data or information according to description, functions, procedures, proposals, methods and/or operation flow charts disclosed in the present disclosure.

One or more processors 102, 202 may be referred to as a controller, a micro controller, a micro processor or a micro computer. One or more processors 102, 202 may be implemented by a hardware, a firmware, a software, or their combination. In an example, one or more ASICs(Application Specific Integrated Circuit), one or more DSPs(Digital Signal Processor), one or more DSPDs(Digital Signal Processing Device), one or more PLDs (Programmable Logic Device) or one or more FPGAs(Field Programmable Gate Arrays) may be included in one or more processors 102, 202. Description, functions, procedures, proposals, methods and/or operation flow charts disclosed in the present disclosure may be implemented by using a firmware or a software and a firmware or a software may be implemented to include a module, a procedure, a function, etc. A firmware or a software configured to perform description, functions, procedures, proposals, methods and/or operation flow charts disclosed in the present disclosure may be included in one or more processors 102, 202 or may be stored in one or more memories 104, 204 and driven by one or more processors 102, 202. Description, functions, procedures, proposals, methods and/or operation flow charts disclosed in the present disclosure may be implemented by using a firmware or a software in a form of a code, an instruction and/or a set of instructions.

One or more memories 104, 204 may be connected to one or more processors 102, 202 and may store data, a signal, a message, information, a program, a code, an indication and/or an instruction in various forms. One or more memories 104, 204 may be configured with ROM, RAM, EPROM, a flash memory, a hard drive, a register, a cash memory, a computer readable storage medium and/or their combination. One or more memories 104, 204 may be positioned inside and/or outside one or more processors 102, 202. In addition, one or more memories 104, 204 may be connected to one or more processors 102, 202 through a variety of technologies such as a wire or wireless connection.

One or more transceivers 106, 206 may transmit user data, control information, a wireless signal/channel, etc. mentioned in methods and/or operation flow charts, etc. of the present disclosure to one or more other devices. One or more transceivers 106, 206 may receiver user data, control information, a wireless signal/channel, etc. mentioned in description, functions, procedures, proposals, methods and/or operation flow charts, etc. disclosed in the present disclosure from one or more other devices. For example, one or more transceivers 106, 206 may be connected to one or more processors 102, 202 and may transmit and receive a wireless signal. For example, one or more processors 102, 202 may control one or more transceivers 106, 206 to transmit user data, control information or a wireless signal to one or more other devices. In addition, one or more processors 102, 202 may control one or more transceivers 106, 206 to receive user data, control information or a wireless signal from one or more other devices. In addition, one or more transceivers 106, 206 may be connected to one or more antennas 108, 208 and one or more transceivers 106, 206 may be configured to transmit and receive user data, control information, a wireless signal/channel, etc. mentioned in description, functions, procedures, proposals, methods and/or operation flow charts, etc. disclosed in the present disclosure through one or more antennas 108, 208. In the present disclosure, one or more antennas may be a plurality of physical antennas or a plurality of logical antennas (e.g., an antenna port). One or more transceivers 106, 206 may convert a received wireless signal/channel, etc. into a baseband signal from a RF band signal to process received user data, control information, wireless signal/channel, etc. by using one or more processors 102, 202. One or more transceivers 106, 206 may convert user data, control information, a wireless signal/channel, etc. which are processed by using one or more processors 102, 202 from a baseband signal to a RF band signal. Therefore, one or more transceivers 106, 206 may include an (analogue) oscillator and/or a filter.

For example, one of the STAs 100 and 200 may perform an intended operation of an AP, and the other of the STAs 100 and 200 may perform an intended operation of a non-AP STA. For example, the transceivers 106 and 206 of FIG. 1 may perform a transmission and reception operation of a signal (e.g., a packet or a physical layer protocol data unit (PPDU) conforming to IEEE 802.11a/b/g/n/ac/ax/be). In addition, in the present disclosure, an operation in which various STAs generate transmission/reception signals or perform data processing or calculation in advance for transmission/reception signals may be performed by the processors 102 and 202 of FIG. 1. For example, an example of an operation of generating a transmission/reception signal or performing data processing or calculation in advance for the transmission/reception signal may include 1) determining / acquiring / configuring / calculating / decoding / encoding bit information of fields (signal (SIG), short training field (STF), long training field (LTF), Data, etc.) included in the PPDU, 2) determining / configuring / acquiring time resources or frequency resources (e.g., subcarrier resources) used for fields (SIG, STF, LTF, Data, etc.) included in the PPDU; 3) determining / configuring / acquiring a specific sequence (e.g., pilot sequence, STF/LTF sequence, extra sequence applied to SIG) used for fields (SIG, STF, LTF, Data, etc.) included in the PPDU action, 4) power control operation and/or power saving operation applied to the STA, 5) Operations related to ACK signal determination/acquisition/configuration/calculation/decodin g/encoding, etc. In addition, in the following example, various information (e.g., information related to fields / subfields / control fields / parameters / power, etc.) used by various STAs to determine / acquire / configure / calculate / decode / encode transmission and reception signals may be stored in the memories 104 and 204 of FIG. 1.

Hereinafter, downlink (DL) may mean a link for communication from an AP STA to a non-AP STA, and a DL PPDU / packet / signal may be transmitted and received through the DL. In DL communication, a transmitter may be part of an AP STA, and a receiver may be part of a non-AP STA. Uplink (UL) may mean a link for communication from non-AP STAs to AP STAs, and a UL PPDU / packet / signal may be transmitted and received through the UL. In UL communication, a transmitter may be part of a non-AP STA, and a receiver may be part of an AP STA.

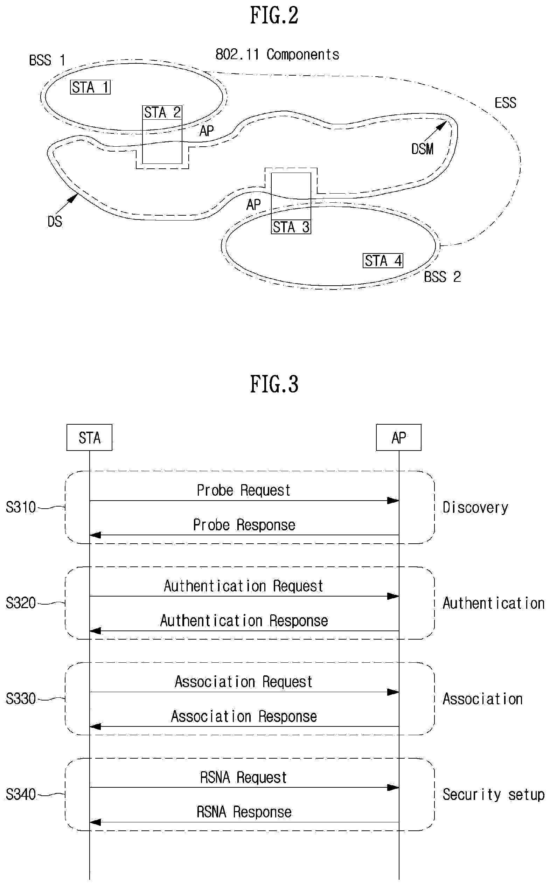

FIG. 2 is a diagram illustrating an exemplary structure of a wireless LAN system to which the present disclosure may be applied.

The structure of the wireless LAN system may consist of be composed of a plurality of components. A wireless LAN supporting STA mobility transparent to an upper layer may be provided by interaction of a plurality of components. A Basic Service Set (BSS) corresponds to a basic construction block of a wireless LAN. FIG. 2 exemplarily shows that two BSSs (BSS1 and BSS2) exist and two STAs are included as members of each BSS (STA1 and STA2 are included in BSS1, and STA3 and STA4 are included in BSS2). An ellipse representing a BSS in FIG. 2 may also be understood as representing a coverage area in which STAs included in the corresponding BSS maintain communication. This area may be referred to as a Basic Service Area (BSA). When an STA moves out of the BSA, it may not directly communicate with other STAs within the BSA.

If the DS shown in FIG. 2 is not considered, the most basic type of BSS in a wireless LAN is an independent BSS (IBSS). For example, IBSS may have a minimal form containing only two STAs. For example, assuming that other components are omitted, BSS1 containing only STA1 and STA2 or BSS2 containing only STA3 and STA4 may respectively correspond to representative examples of IBSS. This configuration is possible when STAs may communicate directly without an AP. In addition, in this type of wireless LAN, it is not configured in advance, but may be configured when a LAN is required, and this may be referred to as an ad-hoc network. Since the IBSS does not include an AP, there is no centralized management entity. That is, in IBSS, STAs are managed in a distributed manner. In IBSS, all STAs may be made up of mobile STAs, and access to the distributed system (DS) is not allowed, forming a self-contained network.

Membership of an STA in the BSS may be dynamically changed by turning on or off the STA, entering or exiting the BSS area, and the like. To become a member of the BSS, the STA may join the BSS using a synchronization process. In order to access all services of the BSS infrastructure, the STA shall be associated with the BSS. This association may be dynamically established and may include the use of a Distribution System Service (DSS).

A direct STA-to-STA distance in a wireless LAN may be limited by PHY performance. In some cases, this distance limit may be sufficient, but in some cases, communication between STAs at a longer distance may be required. A distributed system (DS) may be configured to support extended coverage.

DS means a structure in which BSSs are interconnected. Specifically, as shown in FIG. 2, a BSS may exist as an extended form of a network composed of a plurality of BSSs. DS is a logical concept and may be specified by the characteristics of Distributed System Media (DSM). In this regard, a wireless medium (WM) and a DSM may be logically separated. Each logical medium is used for a different purpose and is used by different components. These medium are not limited to being the same, nor are they limited to being different. In this way, the flexibility of the wireless LAN structure (DS structure or other network structure) may be explained in that a plurality of media are logically different. That is, the wireless LAN structure may be implemented in various ways, and the corresponding wireless LAN structure may be independently specified by the physical characteristics of each embodiment.

A DS may support a mobile device by providing seamless integration of a plurality of BSSs and providing logical services necessary to address an address to a destination. In addition, the DS may further include a component called a portal that serves as a bridge for connection between the wireless LAN and other networks (e.g., IEEE 802.X).

The AP enables access to the DS through the WM for the associated non-AP STAs, and means an entity that also has the functionality of an STA. Data movement between the BSS and the DS may be performed through the AP. For example, STA2 and STA3 shown in FIG. 2 have the functionality of STAs, and provide a function allowing the associated non-AP STAs (STA1 and STA4) to access the DS. In addition, since all APs basically correspond to STAs, all APs are addressable entities. The address used by the AP for communication on the WM and the address used by the AP for communication on the DSM are not necessarily the same. A BSS composed of an AP and one or more STAs may be referred to as an infrastructure BSS.

Data transmitted from one of the STA(s) associated with an AP to a STA address of the corresponding AP may be always received on an uncontrolled port and may be processed by an IEEE 802.1X port access entity. In addition, when a controlled port is authenticated, transmission data (or frames) may be delivered to the DS.

In addition to the structure of the DS described above, an extended service set (ESS) may be configured to provide wide coverage.

An ESS means a network in which a network having an arbitrary size and complexity is composed of DSs and BSSs. The ESS may correspond to a set of BSSs connected to one DS. However, the ESS does not include the DS. An ESS network is characterized by being seen as an IBSS in the Logical Link Control (LLC) layer. STAs included in the ESS may communicate with each other, and mobile STAs may move from one BSS to another BSS (within the same ESS) transparently to the LLC. APs included in one ESS may have the same service set identification (SSID). The SSID is distinguished from the BSSID, which is an identifier of the BSS.

The wireless LAN system does not assume anything about the relative physical locations of BSSs, and all of the following forms are possible. BSSs may partially overlap, which is a form commonly used to provide continuous coverage. In addition, BSSs may not be physically connected, and logically there is no limit on the distance between BSSs. In addition, the BSSs may be physically located in the same location, which may be used to provide redundancy. In addition, one (or more than one) IBSS or ESS networks may physically exist in the same space as one (or more than one) ESS network. When an ad-hoc network operates in a location where an ESS network exists, when physically overlapping wireless networks are configured by different organizations, or when two or more different access and security policies are required in the same location, this may correspond to the form of an ESS network in the like.

FIG. 3 is a diagram for explaining a link setup process to which the present disclosure may be applied.

In order for an STA to set up a link with respect to a network and transmit/receive data, it first discovers a network, performs authentication, establishes an association, and need to perform the authentication process for security. The link setup process may also be referred to as a session initiation process or a session setup process. In addition, the processes of discovery, authentication, association, and security setting of the link setup process may be collectively referred to as an association process.

In step S310, the STA may perform a network discovery operation. The network discovery operation may include a scanning operation of the STA. That is, in order for the STA to access the network, it needs to find a network in which it can participate. The STA shall identify a compatible network before participating in a wireless network, and the process of identifying a network existing in a specific area is called scanning.

Scanning schemes include active scanning and passive scanning. FIG. 3 exemplarily illustrates a network discovery operation including an active scanning process. In active scanning, an STA performing scanning transmits a probe request frame to discover which APs exist around it while moving channels and waits for a response thereto. A responder transmits a probe response frame as a response to the probe request frame to the STA that has transmitted the probe request frame. Here, the responder may be an STA that last transmitted a beacon frame in the BSS of the channel being scanned. In the BSS, since the AP transmits the beacon frame, the AP becomes a responder, and in the IBSS, the STAs in the IBSS rotate to transmit the beacon frame, so the responder is not constant. For example, a STA that transmits a probe request frame on channel 1 and receives a probe response frame on channel 1, may store BSS-related information included in the received probe response frame and may move to the next channel (e.g., channel 2) and perform scanning (i.e., transmission/reception of a probe request/response on channel 2) in the same manner.

Although not shown in FIG. 3, the scanning operation may be performed in a passive scanning manner. In passive scanning, a STA performing scanning waits for a beacon frame while moving channels. The beacon frame is one of the management frames defined in IEEE 802.11, and is periodically transmitted to notify the existence of a wireless network and to allow the STA performing scanning to find a wireless network and participate in the wireless network. In the BSS, the AP serves to transmit beacon frames periodically, and in the IBSS, STAs within the IBSS rotate to transmit beacon frames. When the STA performing scanning receives a beacon frame, the STA stores information for the BSS included in the beacon frame and records beacon frame information in each channel while moving to another channel. The STA receiving the beacon frame may store BSS-related information included in the received beacon frame, move to the next channel, and perform scanning in the next channel in the same way. Comparing active scanning and passive scanning, active scanning has an advantage of having less delay and less power consumption than passive scanning.

After the STA discovers the network, an authentication process may be performed in step S320. This authentication process may be referred to as a first authentication process in order to be clearly distinguished from the security setup operation of step S340 to be described later.

The authentication process includes a process in which the STA transmits an authentication request frame to the AP, and in response to this, the AP transmits an authentication response frame to the STA. An authentication frame used for authentication request/response corresponds to a management frame.

The authentication frame includes an authentication algorithm number, an authentication transaction sequence number, a status code, a challenge text, a robust security network (RSN), and a Finite Cyclic Group, etc. This corresponds to some examples of information that may be included in the authentication request/response frame, and may be replaced with other information or additional information may be further included.

The STA may transmit an authentication request frame to the AP. The AP may determine whether to allow authentication of the corresponding STA based on information included in the received authentication request frame. The AP may provide the result of the authentication process to the STA through an authentication response frame.

After the STA is successfully authenticated, an association process may be performed in step S330. The association process includes a process in which the STA transmits an association request frame to the AP, and in response, the AP transmits an association response frame to the STA.

For example, the association request frame may include information related to various capabilities, a beacon listen interval, a service set identifier (SSID), supported rates, supported channels, RSN, mobility domain, supported operating classes, Traffic Indication Map Broadcast request (TIM broadcast request), interworking service capability, etc. For example, the association response frame may include information related to various capabilities, status code, association ID (AID), supported rates, enhanced distributed channel access (EDCA) parameter set, received channel power indicator (RCPI), received signal to noise indicator (RSNI), mobility domain, timeout interval (e.g., association comeback time), overlapping BSS scan parameters, TIM broadcast response, Quality of Service (QoS) map, etc. This corresponds to some examples of information that may be included in the association request/response frame, and may be replaced with other information or additional information may be further included.

After the STA is successfully associated with the network, a security setup process may be performed in step S340. The security setup process of step S340 may be referred to as an authentication process through Robust Security Network Association (RSNA) request/response, and the authentication process of step S320 is referred to as a first authentication process, and the security setup process of step S340 may also simply be referred to as an authentication process.

The security setup process of step S340 may include, for example, a process of setting up a private key through 4-way handshaking through an Extensible Authentication Protocol over LAN (EAPOL) frame. In addition, the security setup process may be performed according to a security scheme not defined in the IEEE 802.11 standard.

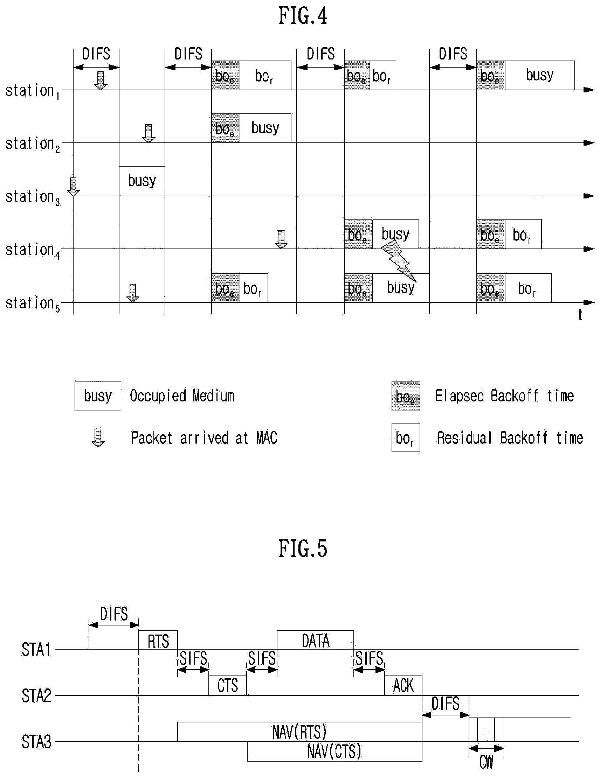

FIG. 4 is a diagram for explaining a backoff process to which the present disclosure may be applied.

In the wireless LAN system, a basic access mechanism of medium access control (MAC) is a carrier sense multiple access with collision avoidance (CSMA/CA) mechanism. The CSMA/CA mechanism is also called Distributed Coordination Function (DCF) of IEEE 802.11 MAC, and basically adopts a "listen before talk" access mechanism. According to this type of access mechanism, the AP and/or STA may perform Clear Channel Assessment (CCA) sensing a radio channel or medium during a predetermined time interval (e.g., DCF Inter-Frame Space (DIFS)), prior to starting transmission. As a result of the sensing, if it is determined that the medium is in an idle state, frame transmission is started through the corresponding medium. On the other hand, if it is detected that the medium is occupied or busy, the corresponding AP and/or STA does not start its own transmission and may set a delay period for medium access (e.g., a random backoff period) and attempt frame transmission after waiting. By applying the random backoff period, since it is expected that several STAs attempt frame transmission after waiting for different periods of time, collision may be minimized.

In addition, the IEEE 802.11 MAC protocol provides a Hybrid Coordination Function (HCF). HCF is based on the DCF and Point Coordination Function (PCF). PCF is a polling-based synchronous access method and refers to a method in which all receiving APs and/or STAs periodically poll to receive data frames. In addition, HCF has Enhanced Distributed Channel Access (EDCA) and HCF Controlled Channel Access (HCCA). EDCA is a contention-based access method for a provider to provide data frames to multiple users, and HCCA uses a non-contention-based channel access method using a polling mechanism. In addition, the HCF includes a medium access mechanism for improving QoS (Quality of Service) of the wireless LAN, and may transmit QoS data in both a Contention Period (CP) and a Contention Free Period (CFP).

Referring to FIG. 4, an operation based on a random backoff period will be described. When the occupied/busy medium changes to an idle state, several STAs may attempt to transmit data (or frames). As a method for minimizing collisions, each of STAs may respectively select a random backoff count and attempt transmission after waiting for a corresponding slot time. The random backoff count has a pseudo-random integer value and may be determined as one of values ranging from 0 to CW. Here, CW is a contention window parameter value. The CW parameter is given CWmin as an initial value, but may take a value twice as large in case of transmission failure (e.g., when an ACK for the transmitted frame is not received). When the CW parameter value reaches CWmax, data transmission may be attempted while maintaining the CWmax value until data transmission is successful, and when data transmission is successful, the CWmin value is reset. The values of CW, CWmin and CWmax are preferably set to 2ⁿ-1 (n = 0, 1, 2, ...).

When the random backoff process starts, the STA continuously monitors the medium while counting down the backoff slots according to the determined backoff count value. When the medium is monitored for occupancy, it stops counting down and waits, and resumes the rest of the countdown when the medium becomes idle.

In the example of FIG. 4, when a packet to be transmitted arrives at the MAC of STA3, STA3 may transmit the frame immediately after confirming that the medium is idle as much as DIFS. The remaining STAs monitor and wait for the medium to be occupied/busy. In the meantime, data to be transmitted may also occur in each of STA1, STA2, and STA5, and each STA waits as long as DIFS when the medium is monitored as idle, and then may perform a countdown of the backoff slot according to the random backoff count value selected by each STA. Assume that STA2 selects the smallest backoff count value and STA1 selects the largest backoff count value. That is, the case where the remaining back-off time of STA5 is shorter than the remaining back-off time of STA1 at the time when STA2 completes the back-off count and starts frame transmission is exemplified. STA1 and STA5 temporarily stop counting down and wait while STA2 occupies the medium. When the occupation of STA2 ends and the medium becomes idle again, STA1 and STA5 wait for DIFS and resume the stopped backoff count. That is, frame transmission may be started after counting down the remaining backoff slots for the remaining backoff time. Since the remaining backoff time of STA5 is shorter than that of STA1, STA5 starts frame transmission. While STA2 occupies the medium, data to be transmitted may also occur in STA4. From the standpoint of STA4, when the medium becomes idle, STA4 may wait for DIFS, and then may perform a countdown according to the random backoff count value selected by the STA4 and start transmitting frames. The example of FIG. 4 shows a case where the remaining backoff time of STA5 coincides with the random backoff count value of STA4 by chance. In this case, a collision may occur between STA4 and STA5. When a collision occurs, both STA4 and STA5 do not receive an ACK, so data transmission fails. In this case, STA4 and STA5 may double the CW value, select a random backoff count value, and perform a countdown. STA1 waits while the medium is occupied due to transmission of STA4 and STA5, waits for DIFS when the medium becomes idle, and then starts frame transmission after the remaining backoff time has elapsed.

As in the example of FIG. 4, the data frame is a frame used for transmission of data forwarded to a higher layer, and may be transmitted after a backoff performed after DIFS elapses from when the medium becomes idle. Additionally, the management frame is a frame used for exchange of management information that is not forwarded to a higher layer, and is transmitted after a backoff performed after an IFS such as DIFS or Point Coordination Function IFS (PIFS). As a subtype frames of management frame, there are a Beacon, an association request/response, a re-association request/response, a probe request/response, an authentication request/response, etc. A control frame is a frame used to control access to a medium. As a subtype frames of control frame, there are Request-To-Send (RTS), Clear-To-Send (CTS), Acknowledgement (ACK), Power Save-Poll (PS-Poll), block ACK (BlockAck), block ACK request (BlockACKReq), null data packet announcement (NDP announcement), and trigger, etc. If the control frame is not a response frame of the previous frame, it is transmitted after backoff performed after DIFS elapses, and if it is a response frame of the previous frame, it is transmitted without performing backoff after short IFS (SIFS) elapses. The type and subtype of the frame may be identified by a type field and a subtype field in a frame control (FC) field.

A Quality of Service (QoS) STA may perform the backoff that is performed after an arbitration IFS (AIFS) for an access category (AC) to which the frame belongs, that is, AIFS[i] (where i is a value determined by AC), and then may transmit the frame. Here, the frame in which AIFS[i] can be used may be a data frame, a management frame, or a control frame other than a response frame.

FIG. 5 is a diagram for explaining a frame transmission operation based on CSMA/CA to which the present disclosure may be applied.

As described above, the CSMA/CA mechanism includes virtual carrier sensing in addition to physical carrier sensing in which a STA directly senses a medium. Virtual carrier sensing is intended to compensate for problems that may occur in medium access, such as a hidden node problem. For virtual carrier sensing, the MAC of the STA may use a Network Allocation Vector (NAV). The NAV is a value indicating, to other STAs, the remaining time until the medium is available for use by an STA currently using or having the right to use the medium. Therefore, the value set as NAV corresponds to a period in which the medium is scheduled to be used by the STA transmitting the frame, and the STA receiving the NAV value is prohibited from accessing the medium during the corresponding period. For example, the NAV may be configured based on the value of the "duration" field of the MAC header of the frame.

In the example of FIG. 5, it is assumed that a STA1 intends to transmit data to a STA2, and a STA3 is in a position capable of overhearing some or all of frames transmitted and received between the STA1 and the STA2.

In order to reduce the possibility of collision of transmissions of multiple STAs in CSMA/CA based frame transmission operation, a mechanism using RTS/CTS frames may be applied. In the example of FIG. 5, while transmission of the STA1 is being performed, as a result of carrier sensing of the STA3, it may be determined that the medium is in an idle state. That is, the STA1 may correspond to a hidden node to the STA3. Alternatively, in the example of FIG. 5, it may be determined that the carrier sensing result medium of the STA3 is in an idle state while transmission of the STA2 is being performed. That is, the STA2 may correspond to a hidden node to the STA3. Through the exchange of RTS / CTS frames before performing data transmission and reception between the STA1 and the STA2, a STA outside the transmission range of one of the STA1 or the STA2, or a STA outside the carrier sensing range for transmission from the STA1 or the STA3 may not attempt to occupy the channel during data transmission and reception between the STA1 and the STA2.

Specifically, the STA1 may determine whether a channel is being used through carrier sensing. In terms of physical carrier sensing, the STA1 may determine a channel occupation idle state based on an energy level or signal correlation detected in a channel. In addition, in terms of virtual carrier sensing, the STA1 may determine a channel occupancy state using a network allocation vector (NAV) timer.

The STA1 may transmit an RTS frame to the STA2 after performing a backoff when the channel is in an idle state during DIFS. When the STA2 receives the RTS frame, the STA2 may transmit a CTS frame as a response to the RTS frame to the STA1 after SIFS.

If the STA3 cannot overhear the CTS frame from the STA2 but can overhear the RTS frame from the STA1, the STA3 may set a NAV timer for a frame transmission period (e.g., SIFS + CTS frame + SIFS + data frame + SIFS + ACK frame) that is continuously transmitted thereafter, using the duration information included in the RTS frame. Alternatively, if the STA3 can overhear a CTS frame from the STA2 although the STA3 cannot overhear an RTS frame from the STA1, the STA3 may set a NAV timer for a frame transmission period (e.g., SIFS + data frame + SIFS + ACK frame) that is continuously transmitted thereafter, using the duration information included in the CTS frame. That is, if the STA3 can overhear one or more of the RTS or CTS frames from one or more of the STA1 or the STA2, the STA3 may set the NAV accordingly. When the STA3 receives a new frame before the NAV timer expires, the STA3 may update the NAV timer using duration information included in the new frame. The STA3 does not attempt channel access until the NAV timer expires.

When the STA1 receives the CTS frame from the STA2, the STA1 may transmit the data frame to the STA2 after SIFS from the time point when the reception of the CTS frame is completed. When the STA2 successfully receives the data frame, the STA2 may transmit an ACK frame as a response to the data frame to the STA1 after SIFS. The STA3 may determine whether the channel is being used through carrier sensing when the NAV timer expires. When the STA3 determines that the channel is not used by other terminals during DIFS after expiration of the NAV timer, the STA3 may attempt channel access after a contention window (CW) according to a random backoff has passed.

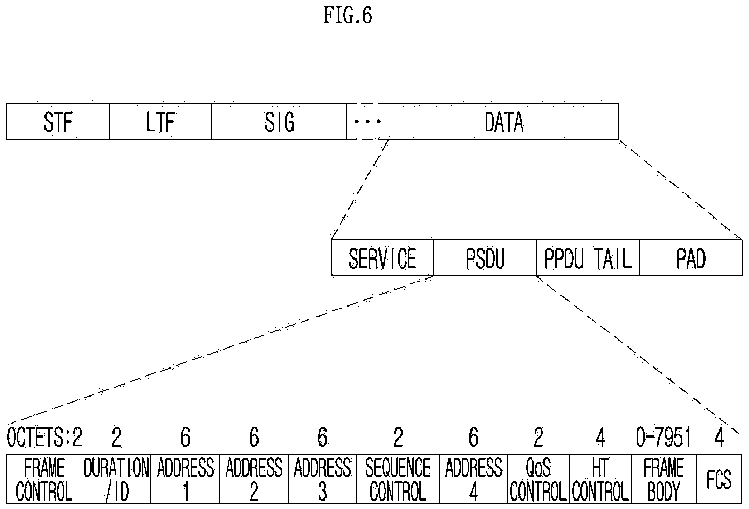

FIG. 6 is a diagram for explaining an example of a frame structure used in a WLAN system to which the present disclosure may be applied.

By means of an instruction or primitive (meaning a set of instructions or parameters) from the MAC layer, the PHY layer may prepare a MAC PDU (MPDU) to be transmitted. For example, when a command requesting transmission start of the PHY layer is received from the MAC layer, the PHY layer switches to the transmission mode and configures information (e.g., data) provided from the MAC layer in the form of a frame and transmits it. In addition, when the PHY layer detects a valid preamble of the received frame, the PHY layer monitors the header of the preamble and sends a command notifying the start of reception of the PHY layer to the MAC layer.

In this way, information transmission/reception in a wireless LAN system is performed in the form of a frame, and for this purpose, a PHY layer protocol data unit (PPDU) frame format is defined.

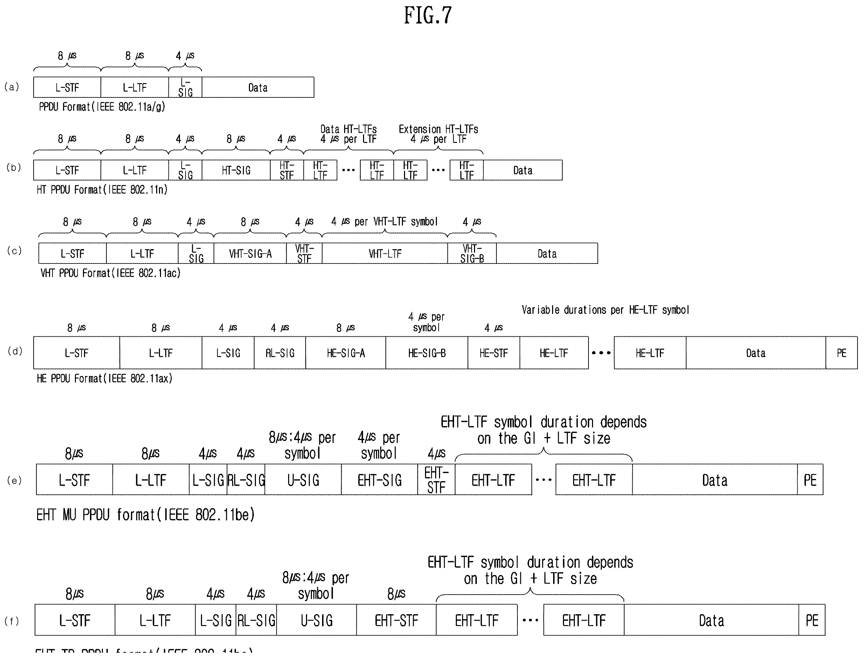

A basic PPDU may include a Short Training Field (STF), Long Training Field (LTF), SIGNAL (SIG) field, and Data (Data) field. The most basic PPDU format (e.g., non-HT (High Throughput) shown in FIG. 7) may consist of only the Legacy-STF (L-STF), Legacy-LTF (L-LTF), Legacy-SIG (L-SIG) fields, and data fields. Additionally, depending on the type of PPDU format (e.g., HT-mixed format PPDU, HT-greenfield format PPDU, VHT (Very High Throughput) PPDU, etc.), additional (or different types) of RL-SIG, U-SIG, non-legacy SIG fields, non-legacy STF, non-legacy LTF (i.e., xx-SIG, xx-STF, xx-LTF (e.g. xx is HT, VHT, HE, EHT, etc.)), etc. may be included between the L-SIG field and the data field.

The STF is a signal for signal detection, automatic gain control (AGC), diversity selection, precise time synchronization, and the like, and the LTF is a signal for channel estimation and frequency error estimation. The STF and LTF may be referred to as signals for synchronization and channel estimation of the OFDM physical layer.

The SIG field may include various information related to PPDU transmission and reception. For example, the L-SIG field consists of 24 bits and the L-SIG field may include 4-bit Rate field, 1-bit Reserved bit, 12-bit Length field, 1-bit Parity field, and 6-bit Tail field. The RATE field may include information about the modulation and coding rate of data. For example, the 12-bit Length field may include information about the length or time duration of the PPDU. For example, the value of the 12-bit Length field may be determined based on the type of PPDU. For example, for non-HT, HT, VHT, or EHT PPDU, the value of the Length field may be determined to be a multiple of 3. For example, for a HE PPDU, the value of the Length field may be determined as a multiple of 3 + 1 or a multiple of 3 + 2.

The data field may include a SERVICE field, a physical layer service data unit (PSDU), and a PPDU TAIL bit, and may also include padding bits if necessary. Some bits of the SERVICE field may be used for synchronization of the descrambler at the receiving end. The PSDU corresponds to the MAC PDU defined in the MAC layer, and may include data generated/used in the upper layer. The PPDU TAIL bit may be used to return the encoder to a 0 state. Padding bits may be used to adjust the length of a data field in a predetermined unit.

A MAC PDU is defined according to various MAC frame formats, and a basic MAC frame consists of a MAC header, a frame body, and a Frame Check Sequence (FCS). The MAC frame may consist of MAC PDUs and be transmitted/received through the PSDU of the data part of the PPDU frame format.

The MAC header includes a Frame Control field, a Duration/ID field, an Address field, and the like. The frame control field may include control information required for frame transmission/reception. The duration/ID field may be set to a time for transmitting a corresponding frame or the like. For details of the Sequence Control, QoS Control, and HT Control subfields of the MAC header, refer to the IEEE 802.11 standard document.

The null-data PPDU (NDP) format refers to a PPDU format that does not include a data field. In other words, NDP refers to a frame format that includes the PPDU preamble in a general PPDU format (i.e., L-STF, L-LTF, L-SIG fields, and additionally non-legacy SIG, non-legacy STF, non-legacy LTF if present) and does not include the remaining part (i.e., data field).

FIG. 7 is a diagram illustrating examples of PPDUs defined in the IEEE 802.11 standard to which the present disclosure may be applied.

In standards such as IEEE 802.11a/g/n/ac/ax, various types of PPDUs have been used. The basic PPDU format (IEEE 802.11a/g) includes L-LTF, L-STF, L-SIG and Data fields. The basic PPDU format may also be referred to as a non-HT PPDU format(as shown in FIG. 7(a)).

The HT PPDU format (IEEE 802.11n) additionally includes HT-SIG, HT-STF, and HT-LFT(s) fields to the basic PPDU format. The HT PPDU format shown in FIG. 7(b) may be referred to as an HT-mixed format. In addition, an HT-greenfield format PPDU may be defined, and this corresponds to a format consisting of HT-GF-STF, HT-LTF1, HT-SIG, one or more HT-LTF, and Data field, not including L-STF, L-LTF, and L-SIG (not shown).

An example of the VHT PPDU format (IEEE 802.11ac) additionally includes VHT SIG-A, VHT-STF, VHT-LTF, and VHT-SIG-B fields to the basic PPDU format(as shown in FIG. 7(c)).

An example of the HE PPDU format (IEEE 802.11ax) additionally includes Repeated L-SIG (RL-SIG), HE-SIG-A, HE-SIG-B, HE-STF, HE-LTF(s), Packet Extension (PE) field to the basic PPDU format (as shown in FIG 7(d)). Some fields may be excluded or their length may vary according to detailed examples of the HE PPDU format. For example, the HE-SIG-B field is included in the HE PPDU format for multi-user (MU), and the HE-SIG-B is not included in the HE PPDU format for single user (SU). In addition, the HE trigger-based (TB) PPDU format does not include the HE-SIG-B, and the length of the HE-STF field may vary to 8 us. The Extended Range (HE ER) SU PPDU format does not include the HE-SIG-B field, and the length of the HE-SIG-A field may vary to 16us. For example, RL-SIG may be configured the same as L-SIG. The receiving STA can know that the received PPDU is a HE PPDU or an EHT PPDU, which will be described later, based on the presence of the RL-SIG.

The EHT PPDU format may include the EHT MU (multi-user) in FIG. 7(e) and the EHT TB (trigger-based) PPDU in FIG. 7(f). The EHT PPDU format is similar to the HE PPDU format in that it includes RL-SIG followed by L-SIG, but may include U(universal)-SIG, EHT-SIG, EHT-STF, and EHT-LTF following RL-SIG.

The EHT MU PPDU in FIG. 7(e) corresponds to a PPDU carrying one or more data (or PSDU) for one or more users. That is, the EHT MU PPDU may be used for both SU transmission and MU transmission. For example, the EHT MU PPDU may correspond to a PPDU for one receiving STA or multiple receiving STAs.

The EHT TB PPDU in FIG. 7(f) omits the EHT-SIG compared to the EHT MU PPDU. An STA that receives a trigger (e.g., trigger frame or triggered response scheduling (TRS)) for UL MU transmission may perform UL transmission based on the EHT TB PPDU format.

L-STF, L-LTF, L-SIG, RL-SIG, U-SIG (Universal SIGNAL), EHT-SIG fields may be encoded and modulated so that even legacy STAs may attempt demodulation and decoding, and may be mapped based on a determined subcarrier frequency interval (e.g., 312.5 kHz). These may be referred to as pre-EHT modulated fields. Next, the EHT-STF, EHT-LTF, Data, PE fields may be encoded and modulated to be demodulated and decoded by an STA that successfully decodes the non-legacy SIG (e.g., U-SIG and/or EHT-SIG) and obtains the information included in the field, and may be mapped based on a determined subcarrier frequency interval (e.g., 78.125kHz). These may be referred to as EHT modulated fields.

Similarly, in the HE PPDU format, the L-STF, L-LTF, L-SIG, RL-SIG, HE-SIG-A, and HE-SIG-B fields may be referred to as pre-HE modulation fields, and the HE-STF, HE-LTF, Data, and PE fields may be referred to as HE modulation fields. Additionally, in the VHT PPDU format, the L-STF, L-LTF, L-SIG, and VHT-SIG-A fields may be referred to as free VHT modulation fields, and VHT STF, VHT-LTF, VHT-SIG-B, and Data fields may be referred to as VHT modulation fields.

The U-SIG included in the EHT PPDU format of FIG. 7 may be configured based on, for example, two symbols (e.g., two consecutive OFDM symbols). Each symbol (e.g., OFDM symbol) for U-SIG may have a duration of 4us, and U-SIG may have a total duration of 8us. Each symbol of U-SIG may be used to transmit 26 bits of information. For example, each symbol of U-SIG can be transmitted and received based on 52 data tones and 4 pilot tones.

U-SIG may be constructed in units of 20 MHz. For example, if an 80 MHz PPDU is constructed, the U-SIG may be duplicated. That is, the same 4 U-SIGs may be included in the 80 MHz PPDU. PPDUs exceeding 80 MHz bandwidth may include different U-SIGs.

For example, A number of uncoded bits may be transmitted through U-SIG, the first symbol of U-SIG (e.g., U-SIG-1 symbol) may transmit the first X bits of information out of the total A bits of information, and the second symbol of U-SIG (e.g., U-SIG-2 symbol) may transmit the remaining Y bit information of the total A bit information. A-bit information (e.g., 52 uncoded bits) may include a CRC field (e.g., a 4-bit long field) and a tail field (e.g., a 6-bit long field). For example, the tail field may be used to terminate the trellis of the convolutional decoder and may be set to 0.

A bit information transmitted by U-SIG may be divided into version-independent bits and version-dependent bits. For example, U-SIG may be included in a new PPDU format not shown in FIG. 7 (e.g., UHR PPDU format), and in the format of the U-SIG field included in the EHT PPDU format and the format of the U-SIG field included in the UHR PPDU format, version-independent bits may be the same, and some or all of the version-dependent bits may be different.

For example, the size of the version-independent bits of U-SIG may be fixed or variable. Version-independent bits may be assigned only to the U-SIG-1 symbol, or to both the U-SIG-1 symbol and the U-SIG-2 symbol. Version-independent bits and version-dependent bits may be called various names, such as first control bit and second control bit.

For example, the version-independent bits of U-SIG may include a 3-bit physical layer version identifier (PHY version identifier), and this information may indicate the PHY version (e.g., EHT, UHR, etc.) of the transmitted/received PPDU. The version-independent bits of U-SIG may include a 1-bit UL/DL flag field. The first value of the 1-bit UL/DL flag field is related to UL communication, and the second value of the UL/DL flag field is related to DL communication. The version-independent bits of U-SIG may include information about the length of transmission opportunity (TXOP) and information about the BSS color ID.

For example, the version-dependent bits of U-SIG may include information directly or indirectly indicating the type of PPDU (e.g., SU PPDU, MU PPDU, TB PPDU, etc.).

Information necessary for PPDU transmission and reception may be included in U-SIG. For example, U-SIG may further include information about whether information on bandwidth, information on the MCS technique applied to the non-legacy SIG (e.g., EHT-SIG or UHR-SIG, etc.), information indicating whether the DCM (dual carrier modulation) technique (e.g., a technique to achieve an effect similar to frequency diversity by reusing the same signal on two subcarriers) is applied to the non-legacy SIG, information on the number of symbols used for the non-legacy SIG, non-legacy SIG is generated across the entire band.

Some of the information required for PPDU transmission and reception may be included in U-SIG and/or non-legacy SIG (e.g., EHT-SIG or UHR-SIG, etc.). For example, information on the type of non-legacy LTF/STF (e.g., EHT-LTF/EHT-STF or UHR-LTF/UHR-STF, etc.), information on the length of the non-legacy LTF and CP (cyclic prefix) length, information on GI (guard interval) applicable to non-legacy LTF, information on preamble puncturing applicable to PPDU, information on RU (resource unit) allocation, etc. may be included only in the U-SIG, only in the non-legacy SIG, or may be indicated by a combination of information included in the U-SIG and information included in the non-legacy SIG.

Preamble puncturing may mean transmission of a PPDU in which a signal does not exist in one or more frequency units among the bandwidth of the PPDU. For example, the size of the frequency unit (or resolution of preamble puncturing) may be defined as 20MHz, 40MHz, etc. For example, preamble puncturing may be applied to a PPDU bandwidth of a predetermined size or more.

In the example of FIG. 7, non-legacy SIGs such as HE-SIG-B and EHT-SIG may include control information for the receiving STA. A non-legacy SIG may be transmitted over at least one symbol, and one symbol may have a length of 4us. Information about the number of symbols used for the EHT-SIG may be included in previous SIGs (e.g., HE-SIG-A, U-SIG, etc.).

Non-legacy SIGs such as HE-SIG-B and EHT-SIG may include common fields and user-specific fields. Common fields and user-specific fields may be coded separately.

In some cases, common fields may be omitted. For example, in a compression mode where non-OFDMA (orthogonal frequency multiple access) is applied, the common field may be omitted, and multiple STAs may receive a PPDU (e.g., a data field of the PPDU) through the same frequency band. In a non-compressed mode where OFDMA is applied, multiple users may receive a PPDU (e.g., a data field of the PPDU) through different frequency bands.

The number of user-specific fields may be determined based on the number of users. One user block field may include up to two user fields. Each user field may be associated with a MU-MIMO allocation or may be associated with a non-MU-MIMO allocation.

The common field may include a CRC bit and a Tail bit, and the length of the CRC bit may be determined to be 4 bits, and the length of the Tail bit may be determined to be 6 bits and set to 000000. The common field may include RU allocation information. RU allocation information may include information about the location of the RU to which multiple users (i.e., multiple receiving STAs) are assigned.

RU may include multiple subcarriers (or tones). RU may be used when transmitting signals to multiple STAs based on OFDMA technique. Additionally, RU may be defined even when transmitting a signal to one STA. Resources may be allocated in RU units for non-legacy STF, non-legacy LTF, and Data fields.

An RU of applicable size may be defined according to the PPDU bandwidth. RU may be defined identically or differently for the applied PPDU format (e.g., HE PPDU, EHT PPDU, UHR PPDU, etc.). For example, in the case of 80MHz PPDU, the RU placement of HE PPDU and EHT PPDU may be different. applicable RU size, number of RU, and RU location for each PPDU bandwidth, DC (direct current) subcarrier location and number, null subcarrier location and number, guard subcarrier location and number, etc. may be referred to as a tone-plan. For example, a tone-plan for high bandwidth may be defined in the form of multiple iterations of a low-bandwidth tone-plan.

RUs of various sizes may be defined as 26-tone RU, 52-tone RU, 106-tone RU, 242-tone RU, 484-tone RU, 996-tone RU, 2X996-tone RU, 3X996-tone RU, etc. MRU (multiple RU) is distinguished from a plurality of individual RUs and corresponds to a group of subcarriers composed of a plurality of RUs. For example, one MRU may be defined as 52+26-tone, 106+26-tone, 484+242-tone, 996+484-tone, 996+484+242-tone, 2X996+484-tone, 3X996-tone, or 3X996+484-tone. Additionally, a plurality of RUs constituting one MRU may or may not be continuous in the frequency domain.

The specific size of the RU may be reduced or expanded. Accordingly, the specific size of each RU (i.e., the number of corresponding tones) in the present disclosure is not limiting and is illustrative. Additionally, in the present disclosure, within a predetermined bandwidth (e.g., 20, 40, 80, 160, 320 MHz, ...), the number of RUs may vary depending on the RU size.

The names of each field in the PPDU formats of FIG. 7 are exemplary, and the scope of the present disclosure is not limited by the names. In addition, examples of the present disclosure may be applied to the PPDU format illustrated in FIG. 7 as well as to a new PPDU format in which some fields are excluded and/or some fields are added based on the PPDU formats of FIG. 7.

### Resource unit

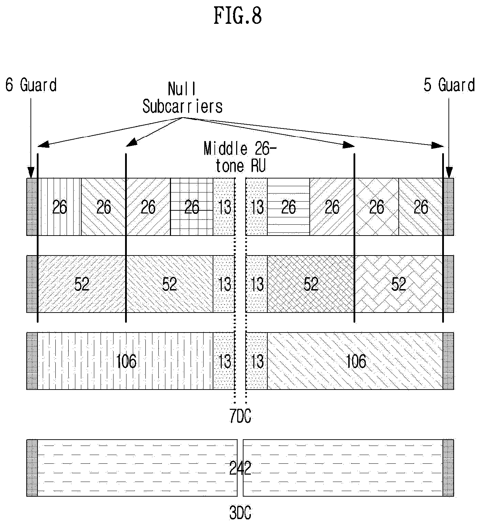

FIGs. 8 to 10 are diagrams for explaining examples of resource units of a WLAN system to which the present disclosure may be applied.

Referring to FIGS. 8 to 10, a resource unit (RU) defined in a wireless LAN system is described. An RU may include multiple subcarriers (or tones). An RU may be used when transmitting a signal to multiple STAs based on an OFDMA technique. An RU may also be defined when transmitting a signal to one STA. An RU may be used for an STF, LTF, data field, etc. of a PPDU.

As illustrated in FIGS. 8 to 10, RUs corresponding to different numbers of tones (i.e., subcarriers) may be used to configure some fields of a 20 MHz, 40 MHz, or 80 MHz X-PPDU (X represents HE, EHT, etc.). For example, resources may be allocated in units of RUs illustrated for X-STF, X-LTF, and Data fields.

FIG. 8 is a diagram illustrating an exemplary allocation of resource units (RUs) used on a 20 MHz band.

As shown in the top of FIG. 8, 26 units (i.e., units corresponding to 26 tones) may be allocated. Six tones may be used as a guard band in the leftmost band of the 20 MHz band, and five tones may be used as a guard band in the rightmost band of the 20 MHz band. In addition, seven DC tones may be inserted in the center band, i.e., the DC band, and 26 units corresponding to 13 tones may exist on the left and right sides of the DC band, respectively. In addition, 26 units, 52 units, and 106 units may be allocated to other bands. Each unit may be allocated for an STA or a user.

The RU layout of FIG. 8 is utilized not only in a situation for multiple users (MUs) but also in a situation for a single user (SU), in which case it is possible to use one 242-unit as shown at the bottom of Fig. 8. In this case, three DC tones can be inserted.

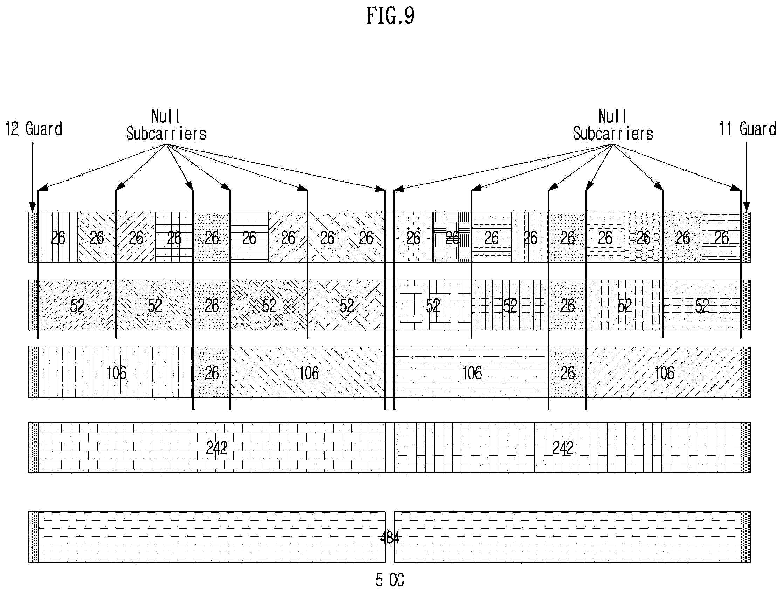

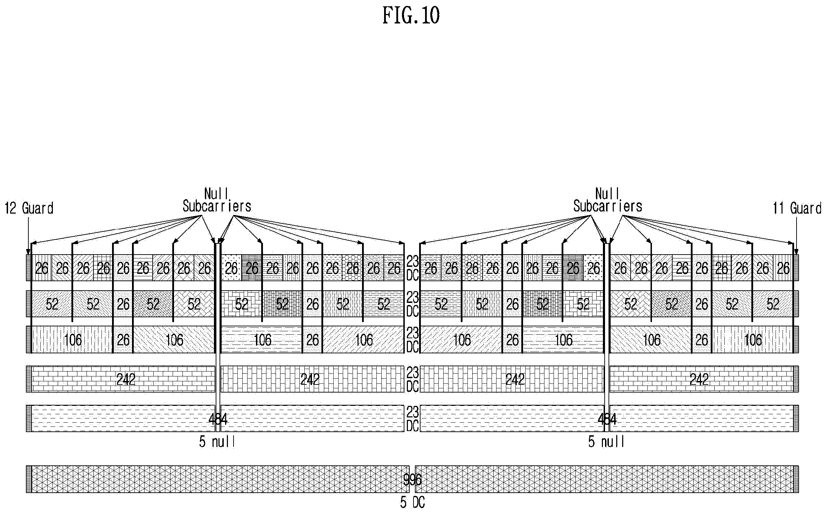

In the example of FIG. 8, RUs of various sizes, i.e., 26-RU, 52-RU, 106-RU, 242-RU, etc. are exemplified, but the specific sizes of these RUs may be reduced or expanded. Accordingly, the specific size of each RU (i.e., the number of corresponding tones) in the present disclosure is not limited and is exemplary. In addition, in the present disclosure, within a given bandwidth (e.g., 20, 40, 80, 160, 320 MHz, ...), the number of RUs may vary depending on the RU size. In the examples of FIG. 9 and/or FIG. 10 described below, the fact that the size and/or number of RUs may be changed is the same as the example of FIG. 8.

FIG. 9 is a diagram showing an exemplary arrangement of resource units (RUs) used on a 40 MHz band.

As in the example of FIG. 8 where RUs of various sizes were used, the example of FIG. 9 can also use 26-RU, 52-RU, 106-RU, 242-RU, 484-RU, etc. In addition, 5 DC tones can be inserted at the center frequency, 12 tones can be used as a guard band in the leftmost band of the 40 MHz band, and 11 tones can be used as a guard band in the rightmost band of the 40 MHz band.

Also, as illustrated, when used for a single user, 484-RU may be used.

FIG. 10 is a diagram showing an exemplary arrangement of resource units (RUs) used on an 80 MHz band.

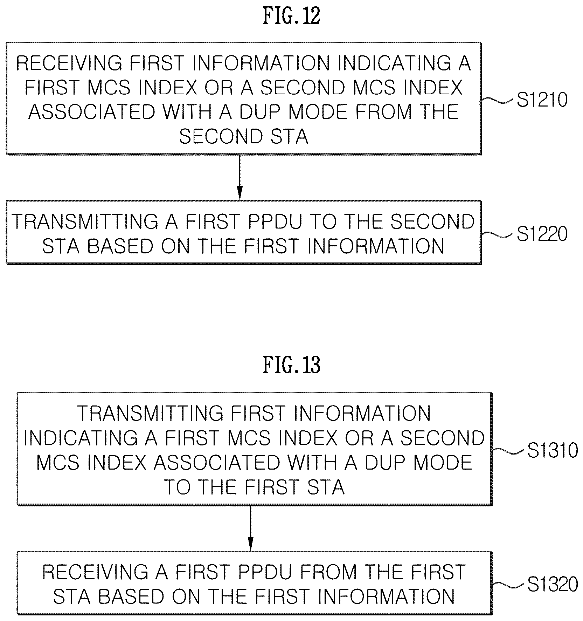

As in the examples of FIGS. 8 and 9 where RUs of various sizes were used, the example of FIG. 10 may also use 26-RU, 52-RU, 106-RU, 242-RU, 484-RU, 996-RU, etc. In addition, in the case of 80MHz PPDU, the RU layout of HE PPDU and EHT PPDU may be different, and the example of FIG. 10 shows an example of the RU layout for 80MHz EHT PPDU. In the example of FIG. 10, 12 tones are used as a guard band in the leftmost band of the 80MHz band, and 11 tones are used as a guard band in the rightmost band of the 80MHz band, which is the same for HE PPDU and EHT PPDU. Unlike HE PPDU where seven DC tones are inserted in the DC band and there is one 26-RU corresponding to 13 tones each on the left and right of the DC band, EHT PPDU has 23 DC tones inserted in the DC band and there is one 26-RU each on the left and right of the DC band. Unlike HE PPDU where there is one null subcarrier between 242-RUs other than the center band, EHT PPDU has five null subcarriers. In HE PPDU, one 484-RU does not contain any null subcarriers, but in EHT PPDU, one 484-RU contains five null subcarriers.

Also, as illustrated, when used for a single user, 996-RU can be used, in which case the insertion of 5 DC tones is common in both HE PPDU and EHT PPDU.

An EHT PPDU of 160 MHz or more may be configured with multiple 80 MHz subblocks of FIG. 10. The RU layout for each 80 MHz subblock may be the same as the RU layout of the 80 MHz EHT PPDU of FIG. 10. If an 80 MHz subblock of a 160 MHz or 320 MHz EHT PPDU is not punctured and the entire 80 MHz subblock is used as part of an RU or an MRU (Multiple RU), the 80 MHz subblock may use 996-RU of FIG. 10.

Here, the MRU corresponds to a group of subcarriers (or tones) composed of a plurality of RUs, and the plurality of RUs constituting the MRU may be RUs having the same size or RUs having different sizes. For example, a single MRU may be defined as 52+26-tone, 106+26-tone, 484+242-tone, 996+484-tone, 996+484+242-tone, 2X996+484-tone, 3X996-tone, or 3X996+484-tone. Here, the plurality of RUs constituting one MRU may correspond to small size (e.g., 26, 52, or 106) RUs or large size (e.g., 242, 484, or 996) RUs. That is, one MRU including a small size RU and a large size RU may not be configured/defined. In addition, a plurality of RUs constituting one MRU may or may not be consecutive in the frequency domain.

When an 80 MHz subblock includes RUs smaller than 996 tones, or parts of the 80 MHz subblock are punctured, the 80 MHz subblock may use RU allocation other than the 996-tone RU.

The RU of the present disclosure can be used for uplink (UL) and/or downlink (DL) communication. For example, when trigger-based UL-MU communication is performed, an STA (e.g., an AP) transmitting a trigger may allocate a first RU (e.g., 26/52/106/242-RU, etc.) to a first STA and a second RU (e.g., 26/52/106/242-RU, etc.) to a second STA through trigger information (e.g., a trigger frame or TRS (triggered response scheduling)). Thereafter, the first STA may transmit a first trigger-based (TB) PPDU based on the first RU, and the second STA can transmit a second TB PPDU based on the second RU. The 1st/2nd TB PPDUs can be transmitted to the AP in the same time interval.

For example, when a DL MU PPDU is configured, an STA (e.g., an AP) transmitting the DL MU PPDU may allocate a first RU (e.g., 26/52/106/242-RU, etc.) to a first STA, and a second RU (e.g., 26/52/106/242-RU, etc.) to a second STA. That is, the transmitting STA (e.g., the AP) may transmit X-STF (e.g., X, for HE, EHT, etc.), X-LTF, and Data fields for the first STA through the first RU within one MU PPDU, and may transmit X-STF, X-LTF, and Data fields for the second STA through the second RU. Information about the RU placement can be signaled via the X-SIG (e.g., X stands for HE, EHT, U) field in the X-PPDU format.

### DCM scheme

DCM is a modulation scheme applied to EHT MCS 14 and 15, and can be applied only to BPSK and 'NSS (number of spatial streams)=1'. When DCM is used only for RU or MRU of 996-tone or less, a bit sequence can be mapped to a pair of symbols (d'ₖ, d'_{q(k)}), where k can be greater than or equal to 0 and less than or equal to N_{SD}-1, and q(k) can be in the range of k greater than or equal to N_{SD} and less than or equal to 2N_{SD}-1.

Rate dependent parameters for various RU or MRU sizes can be provided using N_{SS,u}=1 (i.e., the number of spatial streams for a user). As an example, the modulation scheme and coding rate (R_{U}) for a user for each EHT-MCS index are as shown in Table 1.

**[Table 1]**

| EHT-MCS index | modulation | Rᵤ |
|---|---|---|
| 0 | BPSK | 1 |
| 1 | QPSK | 2 |
| 2 | QPSK | 3 |
| 3 | 16 QAM | 4 |
| 4 | 16 QAM | 4 |
| 5 | 64 QAM | 6 |
| 6 | 64 QAM | 6 |
| 7 | 64 QAM | 6 |
| 8 | 256 QAM | 8 |
| 9 | 256 QAM | 8 |
| 10 | 1024 QAM | 10 |
| 11 | 1024 QAM | 10 |
| 12 | 4096 QAM | 12 |
| 13 | 4096 QAM | 12 |
| 15 | BPSK-DCM | 1 |

And, in the wireless LAN system described above, rate-dependent parameters for the EHT DUP mode can be provided. For example, rate-dependent parameters for EHT-MCS 14 (e.g., when N_{SS,u}=1) can be as shown in Table 2. Here, R represents a coding rate. That is, when EHT-MCS 14 is applied, DCM and BPSK with a coding rate of 1/2 can be applied.

**[Table 2]**

| Modul ation | Bandw idth | R | NBPSC S | NSD | NCBPS | NDBPS | Date rate (Mb/s) | | |
|---|---|---|---|---|---|---|---|---|---|
| | | | | | | | 0.8us GI | 1.6us GI | 3.2us GI |
| BPSK-DCM | 80 MHz | 1/2 | 1 | 234 | 234 | 117 | 836 | 8.1 | 7.3 |
| BPSK-DCM | 160 MHz | 1/2 | 1 | 490 | 490 | 245 | 18.0 | 17.0 | 15.3 |
| BPSK-DCM | 320 MHz | 1/2 | 1 | 980 | 980 | 490 | 36.0 | 34.0 | 30.6 |

For BPSK modulation using DCM in RU or MRU of 996 tones or less, the input bits of the constellation mapper can be divided into groups of NCBPS bits (B₀, B₁, ..., B_{NCBPS,u}).

For RU or MRU sizes greater than 996 tones, DCM may be performed on the segment parser output for each 80 MHz frequency sub-block. For each frequency sub-block, DCM mapping may be performed as if the corresponding frequency sub-block were composed of RUs or MRUs of sizes less than or equal to 996 tones, as described above.

### New PPDU format applied to new operating frequency band and MCS applied thereto

The description of the wireless LAN system described above can be mainly applied to a wireless LAN system operating in an existing operating frequency band, for example, a sub-7 GHz band (for example, a 2.4 GHz, 5 GHz, or 6 GHz band). For example, the PPDU format described above can be mainly applied to a wireless LAN system operating in a sub-7 GHz band.

Additionally, a wireless LAN system operating in a high operating frequency band, for example, a millimeter wave (mmWave) band such as a 60 GHz band, has been defined. Hereinafter, for the convenience of description of the present disclosure, the 60 GHz band is expressed instead of the mmWave band, but the mmWave band is not limited to the 60 GHz band.

Limited bandwidth and dense environment issues in the sub-7 GHz band may limit the achievement of high data rates and low latency.

The present disclosure describes a method for transmitting and receiving a new PPDU format that takes into account improved throughput and efficiency in the mmWave band including the 60 GHz band (i.e., not limited to the 60 GHz band), and an MCS setting that can be applied to the transmission and reception of the new PPDU format.

Here, since the scope of the present disclosure is the new PPDU format and the MCS settings applicable to the new PPDU format itself, the examples described below are not necessarily limited to being applied only to systems operating at 60 GHz, and the examples of the present disclosure can be equally applied to other operating bands (e.g., sub-7 GHz bands).

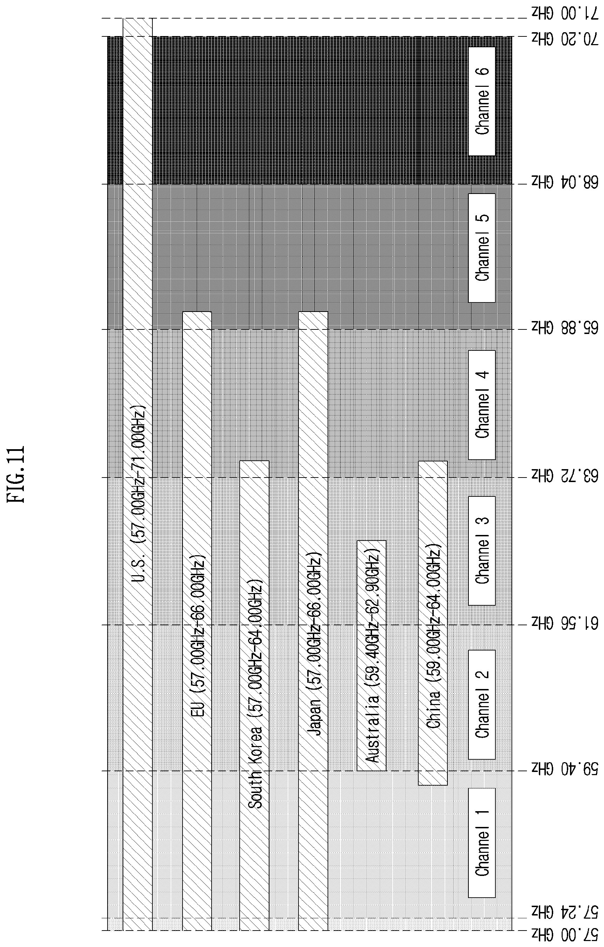

FIG. 11 is a diagram showing regional examples of channelization of the 60 GHz band to which the present disclosure may be applied.

The example of Fig. 11 shows the 60 GHz band used in the United States, the European Union, South Korea, Japan, Australia, and China, and the size and location of the channels defined in the band. For example, the bandwidth of each of the six channels may correspond to 2.16 GHz. In addition, when bandwidth bonding is applied, up to four unit bandwidths may be bonded to support a bandwidth of up to 8.64 GHz.

Additionally, the bandwidths supported in a wireless LAN system corresponding to 1x numerology (e.g., IEEE 802.11ac (VHT)-based system) are 20, 40, 80, and 160 MHz. For the bandwidths of 20, 40, 80, and 160 MHz, the numbers of subcarriers are 64, 128, 256, and 512, respectively. In addition, the tone plans for the numbers and positions of DC subcarriers, guard subcarriers, null subcarriers, and pilot subcarriers are defined. In addition, the subcarrier spacing is defined as 312.5 kHz, the OFDM symbol length excluding the CP (cyclic prefix) length is 3.2 us, and the applicable guard intervals are 0.8 us and 0.4 us, respectively.

As described with reference to FIGS. 8 to 10, the bandwidths supported in a wireless LAN system corresponding to 4x numerology (e.g., IEEE 802.11ax (HE) or IEEE 802.11be (EHT)-based system) are 20, 40, 80, 160, and 320 MHz. For the bandwidths of 20, 40, 80, 160, and 320 MHz, the numbers of subcarriers are 256, 512, 1024, 2048, and 4096, respectively. In addition, the RU/MRU tone plan for the number and positions of DC subcarriers, guard subcarriers, null subcarriers, and pilot subcarriers is defined. Additionally, the subcarrier spacing is defined as 78.125 kHz, the OFDM symbol length excluding CP length is 12.8 us, and the applicable guard intervals are 3.2 us, 1.6 us, and 0.8 us.

Hereinafter, MCS applicable to data fields in PPDU in the 60 GHz band is described.

Basically, a PPDU transmitted in the 60 GHz band can be defined by a preamble and a data field. As another example, a preamble included in the PPDU may or may not include a legacy preamble. If a legacy preamble is not included in the preamble included in the PPDU, the PPDU may have a structure of an STF field, an LTF field, a SIG field, and a data field.

In the 60 GHz band, the phase noise impact may be large, and thus the performance such as error vector magnitude (EVM) may not be good. Therefore, high value modulation may be excluded within the 60 GHz band.

For example, only 64 QAM or 256 QAM can be defined within the 60 GHz band, and 1024 QAM or/and 4096 QAM, etc., can be excluded. That is, referring to Table 1, when BPSK to 64 QAM are applied within the 60 GHz band, MCS values (or indices) 8 to 13 can be excluded. As another example, referring to Table 1, when BPSK to 256 QAM are applied within the 60 GHz band, MCS values (or indices) 10 to 13 can be excluded.

Additionally or alternatively, some higher modulation schemes may be selectively applied within the 60 GHz band.

For example, within the 60 GHz band, MCS values (or indices) 8 to 13 (i.e., 256 QAM, 1024 QAM, and 4096 QAM) may be applied selectively, and modulation schemes corresponding to the remaining MCS values (or indices) may be applied mandatorily.

As another example, within the 0 GHz band, MCS values (or indices) 10 to 13 (i.e., 1024 QAM and 4096 QAM) may be applied selectively, and modulation schemes corresponding to the remaining MCS values (or indices) may be applied mandatorily.

Referring to Table 1, 'BPSK 1/2 + DCM' applied when the number of spatial streams is 1 (i.e., N_{SS} = 1) and MCS 15 is set/indicated may be extended and applied even within the 60 GHz band. In describing the present disclosure, 'BPSK 1/2 + DCM' may mean BPSK and DCM schemes to which a code rate of 1/2 is applied.

In addition, the modulation method applied when the number of spatial streams is 1 (i.e., N_{SS} = 1) and MCS 14 is set/indicated can also be extended and applied within the 60 GHz band. In this case, there may be no limitation on the number of spatial streams.

Additionally or alternatively, for basic wireless LAN systems, MCS 14 may be applied only in low power transmission situations of 80, 160, 320 MHz without puncturing within the 6 GHz band. For the 60 GHz band, 'BPSK 1/2 + DCM + DUP mode' may be applied regardless of bandwidth/puncturing/transmission power when the number of spatial streams is 1 and MCS 14. In this case, there may be no limitation on the number of spatial streams.

Additionally or alternatively, considering the characteristics of 60 GHz, it is possible to consider/define cases where puncturing is not always applied. Considering phase noise, etc., a 60 GHz tone plan based on 1x numerology can be defined, and the bandwidth used at 60 GHz can be configured through the application of upclocking.

The following describes in detail the tone plan and the method of setting/instructing it when applying MCS 14 in the 60 GHz band.

FIG. 12 is a flowchart illustrating a method for a first STA to transmit a PPDU according to one embodiment of the present disclosure.

In FIGS. 12 and 13, each of the first STA and the second STA may be either an AP or a non-AP STA. In addition, FIGS. 12 and 13 describe, but are not limited to, a procedure in which the first STA and the second STA transmit and receive a PPDU in a mmWave (millimeter wave) band or a 60 GHz band. The operations of the first STA and the second STA in FIGS. 12 and 13 may also be applied to other bands.

The first STA may transmit first information indicating a first modulation and coding scheme (MCS) index or a second MCS index associated with a duplication (DUP) mode to the second STA (S1210).

For example, the first MCS index may be one of 0 to 9 and 15, and the second MCS index may be 14. In describing the present disclosure, if the MCS index is A, this may be expressed as 'MCS A'. For example, if the first information indicates the second MCS index, this may mean that the first information indicates 'MCS 14'.

And, the first MCS index may correspond to at least one of binary phase-shift keying (BPSK), quadrature phase shift keying (QPSK), quadrature amplitude modulation (16-QAM), 64-QAM, 256 QAM, or BPSK-DCM.

For example, the first STA may receive the first information via the MCS subfield included in the SIG field of the second PPDU, but is not limited thereto.

The first STA may transmit a first physical layer protocol data unit (PPDU) to the second STA based on the first information (S1220).

As an example of the present disclosure, a first number of data tones may be used for the first PPDU transmission based on the first information indicating a first MCS index in a bandwidth of 20*N MHz (where N is a natural number greater than or equal to 1) MHz, 40*N MHz, or 80*N MHz. And, a second number of data tones smaller than the first number may be used for the first PPDU transmission based on the first information indicating a second MCS index in a bandwidth of 20*N MHz, 40*N MHz, or 80*N MHz.

Specifically, based on the first information indicating the second MCS, at least one specific tone among a first number of data tones (i.e., the number of data tones used for the first PPDU transmission when the first information indicates the first MCS index) within a bandwidth of 20*N MHz, 40*N MHz, or 80*N MHz may be set/defined/determined as a null tone. That is, the second number may be the number of data tones excluding the null tone among the first number of data tones.

Based on the first information indicating the second MCS index, a third number of data tones among the second number of data tones corresponding to the first frequency band may be subject to dual carrier modulation (DCM) and BPSK with a coding rate of 1/2. In addition, the third number of data tones to which DCM and BPSK with a coding rate of 1/2 are applied may be replicated within the second frequency band.

Here, the first frequency band may have a frequency of a lower value than the second frequency band. The third number is half of the second number, and a -1 multiplication operation may be performed on a data tone corresponding to a third quarter among the second number of data tones. For example, the first STA may divide the second number of data tones into four groups and then perform a -1 multiplication operation on the third quarter.

For example, in a 20*N MHz bandwidth, the second number may be 48 and the number of at least one specific tone (i.e., DC/null tone) may be 4. In a 40*N MHz bandwidth, the second number may be 96 and the number of at least one specific tone may be 12. In a 80*N MHz bandwidth, the second number may be 204 and the number of at least one specific tone may be 30.

The number of data tones used when the first information indicates the first MCS index within the 160*N MHz bandwidth and the number of data tones used when the first information indicates the second MCS index within the 160*N MHz bandwidth may be the same.

That is, the first STA may transmit the first PPDU via a data tone based on the MCS index value, etc.

The method performed by the first STA described in the example of FIG. 12 may be performed by the first device (100) of FIG. 1. For example, one or more processors (102) of the first device (100) of FIG. 1 may be configured to receive first information indicating a first MCS index or a second MCS index through one or more transceivers (106). The one or more processors (102) may be configured to transmit a first PPDU to a second STA through one or more transceivers (106) based on the first information.

Furthermore, one or more memories (104) of the first device (100) may store instructions for performing the method described in the example of FIG. 12 when executed by one or more processors (102).

FIG. 13 is a flowchart illustrating a method for a second STA to transmit a PPDU according to one embodiment of the present disclosure.

The second STA may transmit first information indicating the first MCS index or the second MCS index to the first STA (S1310).

For example, the second STA may transmit the first information to the first STA through the MCS subfield included in the SIG field of the second PPDU.

The second STA may receive the first PPDU based on the first information from the first STA (S1320).

The method performed by the second STA described in the example of FIG. 13 may be performed by the second device (200) of FIG. 1. For example, one or more processors (202) of the second device (200) of FIG. 1 may be configured to transmit first information indicating a first MCS index or a second MCS index through one or more transceivers (206). The one or more processors (202) may be configured to receive a first PPDU based on the first information from the second STA through one or more transceivers (206).

Furthermore, one or more memories (204) of the second device (200) may store instructions for performing the method described in the example of FIG. 13 when executed by one or more processors (202).

Below, the tone plan (or design) based on 1x numerology is specifically described when MCS 14 is applied in the 60 GHz band.

That is, the N times upclocking-based bandwidth according to one embodiment of the present disclosure is based on the bandwidth applied to 1x numerology. For example, when N=4, a new bandwidth of 80, 160, 320, 640 MHz, which is 4 times the existing 20, 40, 80, 160 MHz, can be defined.

### Embodiment 1

Embodiment 1 describes the setup and operation within the 60 GHz band, but is not limited thereto. The setup and operation disclosed in Example 1 may be equally applicable to other operating bands (e.g., sub-7 GHz bands).

Specifically, embodiment 1 relates to a tone plan (or design) and related operations for supporting MCS 14 within an upclocking-based bandwidth.

As an example of the present disclosure, 52 data tones may be available in a 20 MHz upclocked bandwidth. DCM and BPSK with a code rate of 1/2 may be applied to 26 data tones having lower frequencies among the 52 data tones. The 26 data tones having lower frequencies with DCM and BPSK with a code rate of 1/2 applied may be duplicated within the area corresponding to the 26 data tones having higher frequencies. Additional phase rotation may be applied to the 52 data tones (e.g., performing a -1 multiplication only in the 3rd quarter), thereby supporting MCS 14. Here, the additional phase rotation may not be applied.

As an example of the present disclosure, 108 data tones may be available in a bandwidth upclocked to 40 MHz. DCM and BPSK with a code rate of 1/2 may be applied to 54 data tones having a lower frequency among the 108 data tones. The 54 data tones having a lower frequency with DCM and BPSK with a code rate of 1/2 applied may be replicated within the area corresponding to the 54 data tones having a higher frequency. Additional phase rotation (e.g., performing a -1 multiplication only in the 3rd quarter) may be applied to the 108 data tones, thereby supporting MCS 14. The additional phase rotation may not be applied here.

As an example of the present disclosure, 234 data tones may be available in an 80 MHz upclocked bandwidth. However, since DCM and BPSK with a code rate of 1/2 cannot be applied to 117 data tones having a lower frequency among the 234 data tones, MCS 14 may be supported by repeating the tone plan upclocked based on 40 MHz twice.

That is, 216 data tones may be available, and DCM and BPSK with a code rate of 1/2 may be applied to 108 data tones having a low frequency. The 108 data tones having a low frequency to which DCM and BPSK with a code rate of 1/2 are applied may be duplicated in the area corresponding to the 108 data tones having a high frequency, and additional phase rotation (e.g., performing a -1 multiplication only in the 3rd quarter) may be applied. Accordingly, MCS 14 may be supported. Here, the additional phase rotation may not be applied.

As an example of the present disclosure, 468 data tones may be available in a bandwidth upclocked to 160 MHz. DCM and BPSK with a code rate of 1/2 may be applied to 234 data tones having a lower frequency among the 468 data tones. The 234 data tones having a lower frequency with DCM and BPSK with a code rate of 1/2 applied may be replicated within the area corresponding to the 234 data tones having a higher frequency. Additional phase rotation (e.g., performing a -1 multiplication only in the 3rd quarter) may be applied to the 468 data tones, thereby supporting MCS 14. Here, the additional phase rotation may not be applied.

### Embodiment 2

Embodiment 2 relates to a method of supporting MCS 14 by reducing the data tone size. That is, Embodiment 2 relates to a method of supporting MCS 14 by not transmitting a signal to a data tone at a specific position among the available bandwidth in the upclocked bandwidth (i.e., using a null tone) .

As an example of the present disclosure, among 52 data tones which are available data tones within a bandwidth upclocked at 20 MHz, 4 tones on the guard side (i.e., 4 tones in the direction where the guard exists) may be used as null tones. That is, 4 tones of the 52 data tones are used as null tones, and DCM and BPSK with a coding rate of 1/2 can be applied to 24 data tones having lower frequencies among the remaining 48 tones. Here, a method of applying DCM and BPSK with a coding rate of 1/2 to the 24 data tones may be the same as a method of applying DCM and BPSK with a coding rate of 1/2 to a 26-tone RU (i.e., a case where 2 pilot tones are added to the 24 data tones).

The 24 data tones with lower frequency applied with DCM and BPSK with code rate 1/2 may be duplicated in the area corresponding to the 24 data tones with higher frequency, and MCS 14 may be supported by applying additional phase rotation (e.g., multiplying by -1 only in the 3rd quarter). Here, the additional phase rotation may not be applied.

As another example of the present disclosure, among 108 data tones which are available data tones within a 40 MHz upclocked bandwidth, 12 tones on the guard or DC side (i.e., 12 tones in the direction where guard/DC exists) may be used as null tones. That is, 12 tones of the 108 data tones are used as null tones, and DCM and BPSK with a code rate of 1/2 may be applied to 48 data tones having lower frequencies among the remaining 96 tones. Here, a method of applying DCM and BPSK with a code rate of 1/2 to the 48 data tones can be the same as a method of applying DCM and BPSK with a code rate of 1/2 to a 52-tone RU (i.e., when 4 pilot tones are added to the 48 data tones).

The 48 data tones with lower frequency applied with DCM and BPSK with code rate 1/2 may be duplicated in the area corresponding to the 48 data tones with higher frequency, and MCS 14 can be supported by applying additional phase rotation (e.g., multiplying by -1 only in the 3rd quarter). Here, the additional phase rotation may not be applied.

As another example of the present disclosure, among 234 data tones which are available data tones within an 80 MHz upclocked bandwidth, 30 tones on the guard or DC side (i.e., 204 tones in the direction where guard/DC exists) can be used as null tones. That is, 30 tones of 234 data tones are used as null tones, and DCM and BPSK with a coding rate of 1/2 can be applied to 102 data tones having a lower frequency among the remaining 204 tones. Here, a method of applying DCM and BPSK with a coding rate of 1/2 to the 102 data tones can be the same as a method of applying DCM and BPSK with a coding rate of 1/2 to a 106-tone RU (i.e., a case where 4 pilot tones are added to the 102 data tones).

The 106 data tones with lower frequency applied with DCM and BPSK with code rate 1/2 can be duplicated in the area corresponding to the 106 data tones with higher frequency, and MCS 14 can be supported by applying additional phase rotation (e.g., multiplying by -1 only in the 3rd quarter). Here, the additional phase rotation may not be applied.

In another example of the present disclosure, the available 468 data tones can be used as is in a bandwidth upclocked to 160 MHz. For example, DCM and BPSK with a code rate of 1/2 can be applied to 234 data tones of lower frequency among the total 468 data tones. Here, the method of applying DCM and BPSK with a code rate of 1/2 to the 234 data tones can be the same as the method of applying DCM and BPSK with a code rate of 1/2 to a 242-tone RU (i.e., when 8 pilot tones are added to the 234 data tones).

The low frequency 234 data tones with DCM and BPSK with coding rate 1/2 can be replicated in the area corresponding to the high frequency 234 data tones, and MCS 14 can be supported by applying additional phase rotation (e.g., multiplying by -1 only in the 3rd quarter). Here, the additional phase rotation may not be applied.

### Embodiment 3

Embodiment 3 relates to a method for indicating MCS and a configuration of a field for MCS indication.

MCS (e.g., MCS value or/and MCS index) may be indicated via the SIG field included in the PPDU in the 60 GHz band. As another example, a control frame for 60 GHz support within sub-7 GHz may be defined. The control frame may indicate the MCS to be applied to the PPDU in the 60 GHz band.

As an example of the present disclosure, the MCS (e.g., MCS value or/and MCS index) may be indicated based on Table 1 and Table 2. As another example, if a specific MCS is not used in the 60 GHz band, only the values/indexes corresponding to the specific MCS that is not used in Table 1 and Table 2 may be reserved.

For example, if only BPSK, QPSK, 16 QAM and 64 QAM are defined at 60 GHz, MCS indices 10 to 13 in Table 1 may be reserved, and the remaining MCS index values may indicate the corresponding modulation schemes.

As another example, if only BPSK, QPSK, 16 QAM, 64 QAM, and 256 QAM are defined at 60 GHz, MCS 10 to 13 in Table 1 may be reserved, and the remaining MCS index values may indicate the corresponding modulation schemes.

Embodiments described above are that elements and features of the present disclosure are combined in a predetermined form. Each element or feature should be considered to be optional unless otherwise explicitly mentioned. Each element or feature may be implemented in a form that it is not combined with other element or feature. In addition, an embodiment of the present disclosure may include combining a part of elements and/or features. An order of operations described in embodiments of the present disclosure may be changed. Some elements or features of one embodiment may be included in other embodiment or may be substituted with a corresponding element or a feature of other embodiment. It is clear that an embodiment may include combining claims without an explicit dependency relationship in claims or may be included as a new claim by amendment after application.

It is clear to a person skilled in the pertinent art that the present disclosure may be implemented in other specific form in a scope not going beyond an essential feature of the present disclosure. Accordingly, the above-described detailed description should not be restrictively construed in every aspect and should be considered to be illustrative. A scope of the present disclosure should be determined by reasonable construction of an attached claim and all changes within an equivalent scope of the present disclosure are included in a scope of the present disclosure.

A scope of the present disclosure includes software or machine-executable commands (e.g., an operating system, an application, a firmware, a program, etc.) which execute an operation according to a method of various embodiments in a device or a computer and a non-transitory computer-readable medium that such a software or a command, etc. are stored and are executable in a device or a computer. A command which may be used to program a processing system performing a feature described in the present disclosure may be stored in a storage medium or a computer-readable storage medium and a feature described in the present disclosure may be implemented by using a computer program product including such a storage medium. A storage medium may include a high-speed random-access memory such as DRAM, SRAM, DDR RAM or other random-access solid state memory device, but it is not limited thereto, and it may include a nonvolatile memory such as one or more magnetic disk storage devices, optical disk storage devices, flash memory devices or other nonvolatile solid state storage devices. A memory optionally includes one or more storage devices positioned remotely from processor(s). A memory or alternatively, nonvolatile memory device(s) in a memory include a non-transitory computer-readable storage medium. A feature described in the present disclosure may be stored in any one of machine-readable mediums to control a hardware of a processing system and may be integrated into a software and/or a firmware which allows a processing system to interact with other mechanism utilizing a result from an embodiment of the present disclosure. Such a software or a firmware may include an application code, a device driver, an operating system and an execution environment/container, but it is not limited thereto.

### [Industrial Applicability]

A method proposed by the present disclosure is mainly described based on an example applied to an IEEE 802.11-based system, but may be applied to various WLAN or wireless communication systems other than the IEEE 802.11-based system.

## Claims

1. A method performed by a first station (STA) in a wireless LAN system, the method comprising:
receiving first information indicating a first modulation and coding scheme (MCS) index or a second MCS index associated with a duplication (DUP) mode from a second STA; and
transmitting a first physical layer protocol data unit (PPDU) to the second STA based on the first information,
wherein based on the first information indicating the first MCS index in a bandwidth of 20*N MHz (N is a natural number greater than or equal to 1), 40*N MHz, or 80*N MHz, a first number of data tones are used, and
wherein based on the first information indicating the second MCS index in a bandwidth of 20*N MHz, 40*N MHz, or 80*N MHz, a second number of data tones smaller than the first number are used.

2. The method of claim 1, wherein:
the first information is received from the second STA through a MCS subfield included in a SIG field of a second PPDU.

3. The method of claim 1, wherein:
based on the first information indicating the second MCS, at least one specific tone among the first number of data tones within the 20*N MHz, 40*N MHz, or 80*N MHz bandwidth is set to a null tone, and
the second number is a number of data tones excluding the null tone among the first number of data tones.

4. The method of claim 1, wherein:
a number of data tones used when the first information indicates the first MCS index within a 160*N MHz bandwidth is same as a number of data tones used when the first information indicates the second MCS index within a 160*N MHz bandwidth.

5. The method of claim 3, wherein:
based on the first information indicating the second MCS index:
a third number of data tones corresponding to a first frequency band among the second number of data tones are applied to DCM (dual carrier modulation) and BPSK (binary phase-shift keying) with a coding rate of 1/2, and
the third number of data tones to which the DCM and BPSK with a coding rate of 1/2 are applied are replicated within a second frequency band.

6. The method of claim 5, wherein:
the first frequency band has a frequency lower than that of the second frequency band,
the third number is half of the second number, and
a -1 multiplication operation is performed on a data tone corresponding to a third quarter among the second number of data tones.

7. The method of claim 6, wherein:
in the 20*N MHz bandwidth, the second number is 48 and a number of the at least one specific tone is 4,
in the 40*N MHz bandwidth, the second number is 96 and a number of the at least one specific tone is 12,
in the 80*N MHz bandwidth, the second number is 204 and a number of the at least one specific tone is 30

8. The method of claim 1, wherein:
the first MCS index corresponds to at least one of BPSK, QPSK (quadrature phase shift keying), 16-QAM (Quadrature Amplitude Modulation), 64-QAM, 256 QAM, or BPSK-DCM.

9. The method of claim 1, wherein:
the first MCS index is one of 0 to 9 and 15, and
the second MCS index is 14.

10. The method of claim 1, wherein:
an operating band in which the first PPDU is transmitted is a mmWave (millimeter wave) band or a 60 GHz band.

11. A first station (STA) operating in a wireless LAN system, the first STA comprising:
at least one transceiver; and
at least one processor connected to the at least one transceiver,
wherein the at least one processor is configured to:
receive, through the at least one transceiver, first information indicating a first modulation and coding scheme (MCS) index or a second MCS index associated with a duplication (DUP) mode from a second STA; and
transmit, through the at least one transceiver, a first physical layer protocol data unit (PPDU) to the second STA based on the first information,
wherein based on the first information indicating the first MCS index in a bandwidth of 20*N MHz (N is a natural number greater than or equal to 1), 40*N MHz, or 80*N MHz, a first number of data tones are used, and
wherein based on the first information indicating the second MCS index in a bandwidth of 20*N MHz, 40*N MHz, or 80*N MHz, a second number of data tones smaller than the first number are used.

12. A method performed by a second station (STA) in a wireless LAN system, the method comprising:
transmitting first information indicating a first modulation and coding scheme (MCS) index or a second MCS index associated with a duplication (DUP) mode to a first STA; and
receiving a first physical layer protocol data unit (PPDU) from the first STA based on the first information,
wherein based on the first information indicating the first MCS index in a bandwidth of 20*N MHz (N is a natural number greater than or equal to 1), 40*N MHz, or 80*N MHz, a first number of data tones are used, and
wherein based on the first information indicating the second MCS index in a bandwidth of 20*N MHz, 40*N MHz, or 80*N MHz, a second number of data tones smaller than the first number are used.

13. A second station (STA) operating in a wireless LAN system, the first STA comprising:
at least one transceiver; and
at least one processor connected to the at least one transceiver,
wherein the at least one processor is configured to:
transmit, through the at least one transceiver, first information indicating a first modulation and coding scheme (MCS) index or a second MCS index associated with a duplication (DUP) mode to a first STA; and
receive, through the at least one transceiver, a first physical layer protocol data unit (PPDU) from the first STA based on the first information,
wherein based on the first information indicating the first MCS index in a bandwidth of 20*N MHz (N is a natural number greater than or equal to 1), 40*N MHz, or 80*N MHz, a first number of data tones are used, and
wherein based on the first information indicating the second MCS index in a bandwidth of 20*N MHz, 40*N MHz, or 80*N MHz, a second number of data tones smaller than the first number are used.

14. A processing apparatus configured to control a first station (STA) in a wireless LAN system, the processing apparatus comprising:
at least one processor; and
at least one computer memory operably connected to the at least one processor and storing instructions that, based on being executed by the at least one processor, perform operations comprising:
receiving first information indicating a first modulation and coding scheme (MCS) index or a second MCS index associated with a duplication (DUP) mode from a second STA; and
transmitting a first physical layer protocol data unit (PPDU) to the second STA based on the first information,
wherein based on the first information indicating the first MCS index in a bandwidth of 20*N MHz (N is a natural number greater than or equal to 1), 40*N MHz, or 80*N MHz, a first number of data tones are used, and
wherein based on the first information indicating the second MCS index in a bandwidth of 20*N MHz, 40*N MHz, or 80*N MHz, a second number of data tones smaller than the first number are used.

15. At least one non-transitory computer-readable medium storing at least one instruction,
wherein the at least one instruction executable by at least one processor controls a device in a wireless LAN system to:
receiving first information indicating a first modulation and coding scheme (MCS) index or a second MCS index associated with a duplication (DUP) mode from a second STA; and
transmitting a first physical layer protocol data unit (PPDU) to the second STA based on the first information,
wherein based on the first information indicating the first MCS index in a bandwidth of 20*N MHz (N is a natural number greater than or equal to 1), 40*N MHz, or 80*N MHz, a first number of data tones are used, and
wherein based on the first information indicating the second MCS index in a bandwidth of 20*N MHz, 40*N MHz, or 80*N MHz, a second number of data tones smaller than the first number are used.
